# EUROPEAN PATENT APPLICATION

(11) **EP 4 765 781 A1**
(43) Date of publication of application: **24.06.2026**
(21) Application number: 24855719.1
(22) Date of filing: 15.08.2024
(51) Int. Cl.: H04L 67/52

(54) **LOCATION MANAGEMENT CLIENT POSITIONING METHOD AND APPARATUS**

(30) Priority: 18.08.2023 CN 202311049643
(71) Applicant: Datang Mobile Communications Equipment Co., Ltd., Beijing 100085 (CN)
(72) Inventor: WU, Liping, Beijing 100085 (CN)
(74) Representative: Studio Torta S.p.A.
(86) International application number: PCT/CN2024/112495
(87) International publication number: WO 2025/039994

(57) **Abstract**

Embodiments of the present invention relate to the technical field of communications, and provide a location management client positioning method and apparatus. The method comprises: receiving a positioning request sent by a vertical application server to which a first location management client belongs; determining a target location management client which can share a position with the first location management client, wherein location information of the target location management client is used as location information of a first location management client to be positioned; and sending a positioning response to the vertical application server, wherein the positioning response comprises the location information of the target location management client.

## Description

### CROSS-REFERENCE TO RELATED APPLICATION

The present application claims priority to Chinese Patent Application No. 202311049643.0, filed on August 18, 2023, entitled "Location Management Client Positioning Method and Apparatus", which is hereby incorporated by reference in its entirety.

### FIELD

The present application relates to the field of communications, in particular to positioning methods and apparatuses for location management client.

### BACKGROUND

In a location scenario of an application layer, in case that a location request for a location management client (LMC) is received from a vertical application layer (VAL) server to which the LMC belongs, a location management server (LMS) sends a location request to the LMC to be located, receives location information reported by the LMC, and then sends the location information reported by the LMC to the belonged VAL server, thereby realizing location reporting of the LMC.

However, using the above positioning method for location management client would result in a significant waste of signaling resources.

### SUMMARY

Embodiments of the present application provide a positioning method and apparatus for location management client, which may effectively save signaling resources.

According to an embodiment of the present application, a positioning method for location management client performed by a location management server is provided. The method includes:
receiving a location request sent from a vertical application server to which a first location management client belongs, where the location request is used to request location information of the first location management client;
determining a target location management client that shares a same location with the first location management client; and
sending a location response to the vertical application server, where the location response includes location information of the target location management client.

According to an embodiment of the present application, determining the target location management client that shares the same location with the first location management client includes:
determining a second location management client that belongs to a same terminal as the first location management client; and
determining the second location management client as the target location management client.

According to an embodiment of the present application, determining the second location management client that belongs to the same terminal as the first location management client includes:
in case that an international mobile subscriber identity of the first location management client is the same as an international mobile subscriber identity of the second location management client, determining that the first location management client and the second location management client belong to the same terminal.

According to an embodiment of the present application, determining the target location management client that shares the same location with the first location management client includes:
determining a third location management client that is in a same location area as the first location management client; and
determining the third location management client as the target location management client.

According to an embodiment of the present application, the location request includes an associated identity corresponding to the first location management client, and determining the third location management client that is in the same location area as the first location management client includes:
determining associated location management clients from at least one location management client that has been located, where an associated identity corresponding to the associated location management clients is the same as the associated identity corresponding to the first location management client;
sending a location sharing verification request to the associated location management clients, where the location sharing verification request includes an identity of the first location management client and/or the associated identity of the first location management client, and the location sharing verification request is used to request the associated location management clients to determine whether the associated location management clients are in the same location area as the first location management client or not; and
determining, based on location sharing verification responses sent from the associated location management clients, from the associated location management clients having the same associated identity with the first location management client, the third location management client that is in the same location area as the first location management client.

According to an embodiment of the present application, the location request includes a location duration and a location time interval of the first location management client, and before sending the location sharing verification request to the associated location management clients, the method further includes:
sending the location duration and the location time interval to the associated location management clients, where the location duration and the location time interval are used by the associated location management clients to determine a preset time period, and during the preset time period, the associated location management clients and the first location management client are in the same location area; and
receiving the preset time period sent from the associated location management clients;
where sending the location sharing verification request to the associated location management clients includes:
   in case of a determination that the associated location management clients are not within the preset time period, sending the location sharing verification request to the associated location management clients.

According to an embodiment of the present application, the location request includes an identity of the first location management client, and determining the third location management client that is in the same location area as the first location management client includes:
querying, based on the identity of the first location management client and the identity of the third location management client, a core network of 3rd Generation Partner Program, and determining that the first location management client and the third location management client are in the same location area based on a network query result.

According to an embodiment of the present application, the method further includes:
in case of receiving location requests from vertical application servers to which multiple location management clients respectively belong, determining the first location management client from the multiple location management clients based on preset conditions, where the preset conditions include at least one of following:
quality of service (QoS) of a requested location service;
a terminal type or a subscriber identity module (SIM) card type corresponding to a location management client;
an operator strategy; or
a pre-configuration.

According to an embodiment of the present application, a location registration request of the first location management client includes indication information, and sending the location response to the vertical application server includes:
in case that the indication information indicates to permit sharing the location information of the target location management client, sending the location response to the vertical application server.

According to an embodiment of the present application, the method further includes:
receiving a location service registration request sent from the target location management client, where the location service registration request includes at least one of following:
an international mobile subscriber identity of the target location management client;
an associated identity corresponding to the target location management client;
a terminal type or a subscriber identity module (SIM) card type corresponding to the target location management client; or
indication information, where the indication information is used to indicate whether to permit sharing the location information of the target location management client or not.

According to an embodiment of the present application, the method further includes:
in case of satisfying at least one of following conditions, sending the location request to the first location management client, where the conditions include:
the location information of the target location management client failing to meet quality of service (QoS) of a vertical service;
not permitting to share the location information of the target location management client; or
having no location management client in a same location area as the first location management client.

According to an embodiment of the present application, a positioning method for location management client performed by a target location management client is provided. The method includes:
sending location information of the target location management client to a location management server, where the location information is used to represent location information of a first location management client in case that the target location management client shares a same location with the first location management client.

According to an embodiment of the present application, the method further includes:
sending a location service registration request to the location management server, where the location service registration request includes at least one of following:
an international mobile subscriber identity of the target location management client;
an associated identity of the target location management client;
a terminal type or a subscriber identity module (SIM) card type corresponding to the target location management client; or
indication information, where the indication information is used to indicate whether to permit sharing the location information of the target location management client or not.

According to an embodiment of the present application, in case that the international mobile subscriber identity of the target location management client is the same as an international mobile subscriber identity of the first location management client, the target location management client shares the same location with the first location management client.

According to an embodiment of the present application, the method further includes:
receiving a location sharing verification request sent from the location management server, where the location sharing verification request includes an identity of the first location management client and/or an associated identity of the first location management client;
determining, based on the identity of the first location management client and/or the associated identity of the first location management client, a location sharing verification result, where the location sharing verification result is used to indicate whether the first location management client is in a same location area as the target location management client or not; and
sending a location sharing verification response to the location management server, where the location sharing verification response includes the location sharing verification result.

According to an embodiment of the present application, the method further includes:
receiving a location duration and a location time interval of the first location management client sent from the location management server;
determining, based on the location duration and the location time interval, a preset time period, where during the preset time period, the associated location management client and the first location management client are in the same location area; and
sending the preset time period to the location management server, where the preset time period is used to determine whether to send the location sharing verification request or not.

According to an embodiment of the present application, determining, based on the identity of the first location management client and/or the associated identity of the first location management client, the location sharing verification result includes:
outputting prompt information to a user based on the identity of the first location management client and/or the associated identity of the first location management client, where the prompt information is used to prompt the user to confirm that the first location management client is in the same location area as the target location management client, or the first location management client is not in the same location area as the target location management client; and
in response to an operation of the user on the prompt information, determining the location sharing verification result.

According to an embodiment of the present application, determining, based on the identity of the first location management client and/or the associated identity of the first location management client, the location sharing verification result includes:
establishing, based on the identity of the first location management client and/or the associated identity of the first location management client, a sidelink connection with the first location management client; and
in case that the sidelink connection is established, determining, based on a distance between the first location management client and the target location management client, the location sharing verification result.

According to an embodiment of the present application, a location management server is provided. The location management server includes: a memory, a transceiver, and a processor;
the memory is used for storing a computer program; the transceiver is used for receiving and sending data under control of the processor; and the processor is used for reading the computer program in the memory and performing the following operations:
receiving a location request sent from a vertical application server to which a first location management client belongs, where the location request is used to request location information of the first location management client;
determining a target location management client that shares a same location with the first location management client; and
sending a location response to the vertical application server, where the location response includes location information of the target location management client.

According to an embodiment of the present application, determining the target location management client that shares the same location with the first location management client includes:
determining a second location management client that belongs to a same terminal as the first location management client; and
determining the second location management client as the target location management client.

According to an embodiment of the present application, determining the second location management client that belongs to the same terminal as the first location management client includes:
in case that an international mobile subscriber identity of the first location management client is the same as an international mobile subscriber identity of the second location management client, determining that the first location management client and the second location management client belong to the same terminal.

According to an embodiment of the present application, determining the target location management client that shares the same location with the first location management client includes:
determining a third location management client that is in a same location area as the first location management client; and
determining the third location management client as the target location management client.

According to an embodiment of the present application, the location request includes an associated identity corresponding to the first location management client, and determining the third location management client that is in the same location area as the first location management client includes:
determining associated location management clients from at least one location management client that has been positioned, where an associated identity corresponding to the associated location management clients is the same as the associated identity corresponding to the first location management client;
sending a location sharing verification request to the associated location management clients, where the location sharing verification request includes an identity of the first location management client and/or the associated identity of the first location management client, and the location sharing verification request is used to request the associated location management clients to determine whether the associated location management clients are in the same location area as the first location management client or not; and
determining, based on location sharing verification responses sent from the associated location management clients, from the associated location management clients having the same associated identity with the first location management client, the third location management client that is in the same location area as the first location management client.

According to an embodiment of the present application, the location request includes a location duration and a location time interval of the first location management client, and before sending the location sharing verification request to the associated location management clients, the processor is further used to perform following operations:
sending the location duration and the location time interval to the associated location management clients, where the location duration and the location time interval are used by the associated location management clients to determine a preset time period, and during the preset time period, the associated location management clients and the first location management client are in the same location area; and
receiving the preset time period sent from the associated location management clients;
where sending the location sharing verification request to the associated location management clients includes:
   in case of a determination that the associated location management clients are not within the preset time period, sending the location sharing verification request to the associated location management clients.

According to an embodiment of the present application, the location request includes an identity of the first location management client, and determining the third location management client that is in the same location area as the first location management client includes:
querying, based on the identity of the first location management client and the identity of the third location management client, a core network of 3rd Generation Partner Program, and determining that the first location management client and the third location management client are in the same location area based on a network query result.

According to an embodiment of the present application, the processor is further used to perform following operations:
in case of receiving location requests from vertical application servers to which multiple location management clients respectively belong, determining the first location management client from the multiple location management clients based on preset conditions, where the preset conditions include at least one of following:
quality of service (QoS) of a requested location service;
a terminal type or a subscriber identity module (SIM) card type corresponding to a location management client;
an operator strategy; or
a pre-configuration.

According to an embodiment of the present application, a location registration request of the first location management client includes indication information, and sending the location response to the vertical application server includes:
in case that the indication information indicates to permit sharing the location information of the target location management client, sending the location response to the vertical application server.

According to an embodiment of the present application, the processor is further used to perform following operations:
receiving a location service registration request sent from the target location management client, where the location service registration request includes at least one of following:
an international mobile subscriber identity of the target location management client;
an associated identity of the target location management client;
a terminal type or a subscriber identity module (SIM) card type corresponding to the target location management client; or
indication information, where the indication information is used to indicate whether to permit sharing the location information of the target location management client or not.

According to an embodiment of the present application, the processor is further used to perform following operations:
in case of satisfying at least one of following conditions, sending the location request to the first location management client, where the conditions include:
the location information of the target location management client failing to meet quality of service (QoS) of a vertical service;
not permitting sharing the location information of the target location management client; or
having no location management client in a same location area as the first location management client.

According to an embodiment of the present application, a location management server is provided. The location management server includes: a memory, a transceiver, and a processor;
the memory is used for storing a computer program; the transceiver is used for receiving and sending data under control of the processor; and the processor is used for reading the computer program in the memory and performing the following operations:
sending location information of a target location management client to a location management server, where the location information is used to represent location information of a first location management client in case that the target location management client shares a same location with the first location management client.

According to an embodiment of the present application, the processor is further used to perform following operations:
sending a location service registration request to the location management server, where the location service registration request includes at least one of following:
an international mobile subscriber identity of the target location management client;
an associated identity corresponding to the target location management client;
a terminal type or a subscriber identity module (SIM) card type corresponding to the target location management client; or
indication information, where the indication information is used to indicate whether to permit sharing the location information of the target location management client or not.

According to an embodiment of the present application, in case that the international mobile subscriber identity of the target location management client is the same as an international mobile subscriber identity of the first location management client, the target location management client shares the same location with the first location management client.

According to an embodiment of the present application, the processor is further used to perform following operations:
receiving a location sharing verification request sent from the location management server, where the location sharing verification request includes an identity of the first location management client and/or an associated identity of the first location management client;
determining, based on the identity of the first location management client and/or the associated identity of the first location management client, a location sharing verification result, where the location sharing verification result is used to indicate whether the first location management client is in a same location area as the target location management client or not; and
sending a location sharing verification response to the location management server, where the location sharing verification response includes the location sharing verification result.

According to an embodiment of the present application, the processor is further used to perform following operations:
receiving a location duration and a location time interval of the first location management client sent from the location management server;
determining, based on the location duration and the location time interval, a preset time period, where during the preset time period, the associated location management client and the first location management client are in the same location area; and
sending the preset time period to the location management server, where the preset time period is used to determine whether to send the location sharing verification request or not.

According to an embodiment of the present application, determining, based on the identity of the first location management client and/or the associated identity of the first location management client, the location sharing verification result includes:
outputting prompt information to a user based on the identity of the first location management client and/or the associated identity of the first location management client, where the prompt information is used to prompt the user to confirm that the first location management client is in the same location area as the target location management client, or the first location management client is not in the same location area as the target location management client; and
in response to an operation of the user on the prompt information, determining the location sharing verification result.

According to an embodiment of the present application, determining, based on the identity of the first location management client and/or the associated identity of the first location management client, the location sharing verification result includes:
establishing, based on the identity of the first location management client and/or the associated identity of the first location management client, a sidelink connection with the first location management client; and
in case that the sidelink connection is established, determining, based on a distance between the first location management client and the target location management client, the location sharing verification result.

According to an embodiment of the present application, a positioning apparatus for location management client for use in a location management server is provided. The method includes:
a first receiving unit, used for receiving a location request sent from a vertical application server to which a first location management client belongs, where the location request is used to request location information of the first location management client;
a processing unit, used for determining a target location management client that shares a same location with the first location management client; and
a first sending unit, used for sending a location response to the vertical application server, where the location response includes location information of the target location management client.

According to an embodiment of the present application, the processing unit is used for determining a second location management client that belongs to a same terminal as the first location management client; and determining the second location management client as the target location management client.

According to an embodiment of the present application, the processing unit is used for, in case that an international mobile subscriber identity of the first location management client is the same as an international mobile subscriber identity of the second location management client, determining that the first location management client and the second location management client belong to the same terminal.

According to an embodiment of the present application, the processing unit is used for determining a third location management client that is in a same location area as the first location management client; and
determining the third location management client as the target location management client.

According to an embodiment of the present application, the location request includes an associated identity corresponding to the first location management client, and the processing unit is used for:
determining associated location management clients from at least one location management client that has been located, where an associated identity corresponding to the associated location management clients is the same as the associated identity corresponding to the first location management client; sending a location sharing verification request to the associated location management clients, where the location sharing verification request includes an identity of the first location management client and/or the associated identity of the first location management client, and the location sharing verification request is used to request the associated location management clients to determine whether the associated location management clients are in the same location area as the first location management client or not; and determining, based on location sharing verification responses sent from the associated location management clients, from the associated location management clients having the same associated identity with the first location management client, the third location management client that is in the same location area as the first location management client.

According to an embodiment of the present application, the location request includes a location duration and a location time interval of the first location management client, and the apparatus further includes a second sending unit and a second receiving unit;
the second sending unit is used for sending the location duration and the location time interval to the associated location management clients, where the location duration and the location time interval are used by the associated location management clients to determine a preset time period, and during the preset time period, the associated location management clients and the first location management client are in the same location area; and
the second receiving unit is used for receiving the preset time period sent from the associated location management clients;
where the processing unit is used for, in case of a determination that the associated location management clients are not within the preset time period, sending the location sharing verification request to the associated location management clients.

According to an embodiment of the present application, the location request includes an identity of the first location management client, and the processing unit is used for:
querying, based on the identity of the first location management client and the identity of the third location management client, a core network of 3rd Generation Partner Program, and determining that the first location management client and the third location management client are in the same location area based on a network query result.

According to an embodiment of the present application,
the processing unit is further used for, in case of receiving location requests from vertical application servers to which multiple location management clients respectively belong, determining the first location management client from the multiple location management clients based on preset conditions, where the preset conditions include at least one of following:
quality of service (QoS) of a requested location service;
a terminal type or a subscriber identity module (SIM) card type corresponding to a location management client;
an operator strategy; or
a pre-configuration.

According to an embodiment of the present application, a location registration request of the first location management client includes indication information, and the sending unit is further used for:
in case that the indication information indicates to permit sharing the location information of the target location management client, sending the location response to the vertical application server.

According to an embodiment of the present application, the apparatus further includes a third receiving unit;
the third receiving unit, used for receiving a location service registration request sent from the target location management client, where the location service registration request includes at least one of following:
an international mobile subscriber identity of the target location management client;
an associated identity corresponding to the target location management client;
a terminal type or a subscriber identity module (SIM) card type corresponding to the target location management client; or
indication information, where the indication information is used to indicate whether to permit sharing the location information of the target location management client or not.

According to an embodiment of the present application, the apparatus further includes a fourth sending unit;
the fourth sending unit is used for, in case of satisfying at least one of following conditions, sending the location request to the first location management client, where the conditions include:
the location information of the target location management client failing to meet quality of service (QoS) of a vertical service;
not permitting sharing the location information of the target location management client; or
having no location management client in a same location area as the first location management client.

According to an embodiment of the present application, a positioning apparatus for location management client for use in a target location management client is provided. The apparatus includes:
a first sending unit, used for sending location information of the target location management client to a location management server, where the location information is used to represent location information of a first location management client in case that the target location management client shares a same location with the first location management client.

According to an embodiment of the present application, the apparatus further includes a second sending unit; the second sending unit is used for:
sending a location service registration request to the location management server, where the location service registration request includes at least one of following:
an international mobile subscriber identity of the target location management client;
an associated identity corresponding to the target location management client;
a terminal type or a subscriber identity module (SIM) card type corresponding to the target location management client; or
indication information, where the indication information is used to indicate whether to permit sharing the location information of the target location management client or not.

According to an embodiment of the present application, in case that the international mobile subscriber identity of the target location management client is the same as an international mobile subscriber identity of the first location management client, the target location management client shares the same location with the first location management client.

According to an embodiment of the present application, the apparatus further includes a first receiving unit, a first processing unit, and a third sending unit;
the first receiving unit is used for receiving a location sharing verification request sent from the location management server, where the location sharing verification request includes an identity of the first location management client and/or an associated identity of the first location management client;
the first processing unit is used for determining, based on the identity of the first location management client and/or the associated identity of the first location management client, a location sharing verification result, where the location sharing verification result is used to indicate whether the first location management client is in a same location area as the target location management client or not; and
the third sending unit is used for sending a location sharing verification response to the location management server, where the location sharing verification response includes the location sharing verification result.

According to an embodiment of the present application, the apparatus further includes a second receiving unit, a second processing unit, and a fourth sending unit;
the second receiving unit is used for receiving a location duration and a location time interval of the first location management client sent from the location management server;
the second processing unit is used for determining, based on the location duration and the location time interval, a preset time period, where during the preset time period, the associated location management client and the first location management client are in the same location area; and
the fourth sending unit is used for sending the preset time period to the location management server, where the preset time period is used to determine whether to send the location sharing verification request or not.

According to an embodiment of the present application, the first processing unit is used for outputting prompt information to a user based on the identity of the first location management client and/or the associated identity of the first location management client, where the prompt information is used to prompt the user to confirm that the first location management client is in the same location area as the target location management client, or the first location management client is not in the same location area as the target location management client; and in response to an operation of the user on the prompt information, determining the location sharing verification result.

According to an embodiment of the present application, the first processing unit is used for establishing, based on the identity of the first location management client and/or the associated identity of the first location management client, a sidelink connection with the first location management client; and
in case that the sidelink connection is established, determining, based on a distance between the first location management client and the target location management client, the location sharing verification result.

According to an embodiment of the present application, a processor readable storage medium is provided, where the processor readable storage medium stores computer programs that cause a processor to perform the positioning method for location management client performed by a location management server; or perform the positioning method for location management client performed by a target location management client.

According to an embodiment of the present application, a positioning method and a positioning apparatus for location management client are provided. The method includes: receiving a location request sent from a vertical application server to which a first location management client belongs; determining a target location management client that shares a same location with the first location management client and using location information of the target location management client as location information of the first location management client to be locate; and sending a location response to the vertical application server, where the location response includes location information of the target location management client. In this way, there is no need to request the first location management client to report the location information of the first location management, which may effectively avoid repeated reporting of the same location information, thereby saving signaling resources.

### BRIEF DESCRIPTION OF THE DRAWINGS

In order to clearly illustrate the solutions according to the embodiments of the present application, the accompanying drawings used in the description of the embodiments are briefly introduced below. It should be noted that the drawings in the following description are only some embodiments of the present application. For those of ordinary skill in the art, other drawings may be obtained according to these drawings without creative efforts.
FIG. 1 is a structural schematic diagram for implementing a location service of an application layer based on a service enabler architecture layer (SEAL) according to an embodiment of the present application;
FIG. 2 is a schematic diagram of a location service of application layers for multiple location management clients (LMCs) according to an embodiment of the present application;
FIG. 3 is a first schematic flowchart of a positioning method for location management client according to an embodiment of the present application;
FIG. 4 is a schematic flowchart of a positioning method for LMC1 according to an embodiment of the present application;
FIG. 5 is another schematic flowchart of a positioning method for LMC1 according to an embodiment of the present application;
FIG. 6 is a schematic flowchart of a positioning method for n LMCs according to an embodiment of the present application;
FIG. 7 is a schematic flowchart of a positioning method for m LMCs according to an embodiment of the present application;
FIG. 8 is a second schematic flowchart of a positioning method for location management client according to an embodiment of the present application;
FIG. 9 is a structural schematic diagram of a location management server according to an embodiment of the present application;
FIG. 10 is a structural schematic diagram of a target location management client according to an embodiment of the present application;
FIG. 11 is a first schematic flowchart of a positioning apparatus positioning location management client according to an embodiment of the present application; and
FIG. 12 is a second schematic flowchart of a positioning apparatus for location management client according to an embodiment of the present application.

### DETAILED DESCRIPTION

The term "and/or" in the embodiments of the present application describes association relationship of the associated objects. For example, A and/or B may represent three situations: only A, A and B together, and only B. The character "/" generally represents that the two objects on two sides have a relationship of "or".

The terms "multiple" and "a plurality of" in the embodiments of the present application refer to two or more, and other quantifiers are similar to them.

The solutions provided by the embodiments of the present application may be applied to a variety of systems, especially 5th generation (5G) systems.

The terminal according to the embodiments of the present application may be a device that provides voice and/or data connectivity to a user, a handheld device with a wireless connection function, or other processing devices connected to a wireless modem. In different systems, the name of the terminal may also be different. For example, in the 5G system, the terminal device may be called user equipment (UE). A wireless terminal device may communicate with one or more core networks (CN) via a radio access network (RAN). The wireless terminal device may be a mobile terminal device, such as a mobile phone (or "cellular" phone) and a computer with a mobile terminal device, for example, a portable, pocket-sized, handheld, computer-built-in or vehicle-mounted mobile device, which exchanges voice and/or data with the radio access network. For example, a personal communication service (PCS) phone, a cordless phone, a session initiated protocol (SIP) phone, a wireless local loop (WLL) station, a personal digital assistant (PDA), and the like. The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present application.

The network device of the embodiments of the present application may be a base station, which may include multiple cells providing services for terminals. Depending on the specific application scenario, the base station may also be called an access point, or may be a device in an access network that communicates with wireless terminal devices through one or more sectors on the air interface, or may be called another name. The network device may be used to convert received air frames into Internet Protocol (IP) packets and vice versa, acting as a router between the wireless terminal device and the rest of the access network, where the rest of the access network may include an Internet Protocol (IP) communication network. The network device may also coordinate the management of attributes of the air interface. For example, the network device in the embodiments of the present application may be a network device (Base Transceiver Station, BTS) in the global system for mobile communications (GSM) or code division multiple access (CDMA), or a network device (NodeB) in wide-band code division multiple access (WCDMA), or an evolved network device (eNB or e-NodeB) in the long term evolution (LTE) system, or a 5G base station (gNB) in the 5G network architecture (next generation system), or a home evolved node B (HeNB), a relay node, a femto, a pico, etc., but is not limited in the embodiments of the present application. In some network structures, a network device may include a centralized unit (CU) node and a distributed unit (DU) node. The centralized unit and the distributed unit may also be geographically separated.

The network device and the terminal device each may use one or more antennas for multiple input multiple output (MIMO) transmission. MIMO transmission may be single-user MIMO (SU-MIMO) transmission or multi-user MIMO (MU-MIMO) transmission. Depending on the mode and number of antenna combinations, MIMO transmission may be a 2D-MIMO transmission, a 3D-MIMO transmission, an FD-MIMO, or a massive-MIMO, and may also be a diversity transmission, a precoding transmission, or a beamforming transmission.

In location scenarios of an application layer for a location management client (LMC), location services of the application layer are generally implemented based on the service enabler architecture layer (SEAL). For example, the LMC may be a terminal or an in-vehicle navigation system within a terminal, and the specific configuration may be determined according to actual needs.

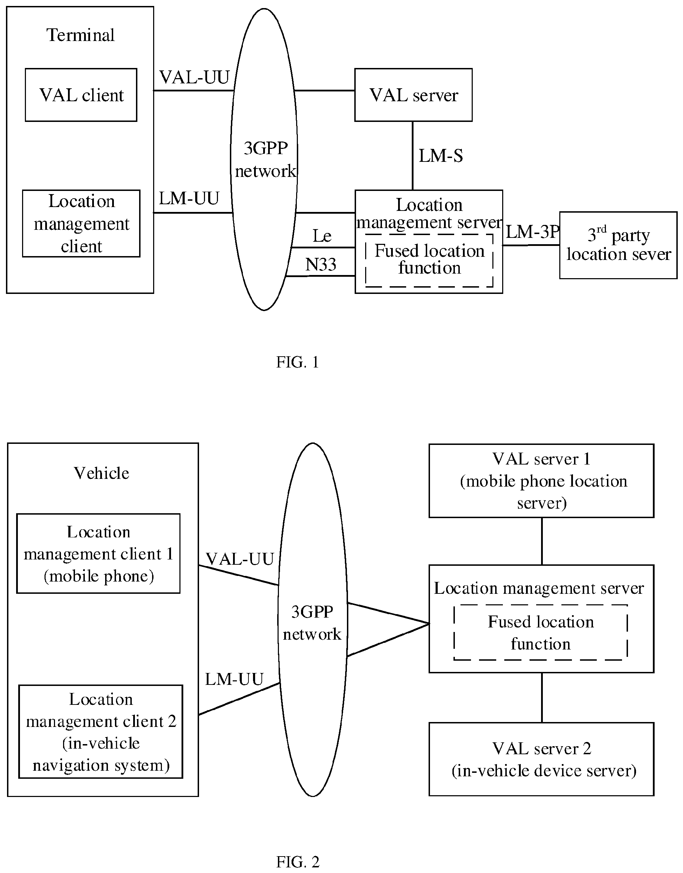

For example, please refer to FIG. 1.FIG. 1 is a structural schematic diagram for implementing a location service of an application layer based on a service enabler architecture layer (SEAL) according to an embodiment of the present application. In case that a vertical application layer (VAL) server to which the LMC belongs has a location requirement for the LMC, the VAL server may send a location request for the LMC to a location management server (LMS). After receiving the location request sent from the VAL server to which the LMC belongs, the LMS sends a location request to the LMC so that the LMC may report the location information of the LMC and send the reported location information to the VAL server to realize the location of the LMC. In case of sending a location request to the LMC, it is also possible to send a location request to a third-party location server to obtain the location information from the third-party location server and thus locate the LMC. The specific configuration may be determined according to actual needs.

Currently, supported location services include requesting, subscribing to, monitoring or notifying location information, as well as on-demand location reporting (such as real-time reporting based on configuration), event-triggered location reporting, terminal-triggered location reporting or VAL server-triggered location reporting, etc.

FIG. 1 illustrates a location scenario of an application layer for LMC. In a location scenario of an application layer for multi-LMC, in case that multiple LMCs need to be located, the LMS may receive location requests for each LMC from the VAL server to which each LMC belongs. The LMS may then send a location request to each LMC to be located, receive the location information reported by each LMC, and send the location information reported by each LMC to respective belonged VAL server, thereby achieving the positioning of multiple LMCs.

Suppose that multiple LMCs to be located include a mobile phone and an in-vehicle navigation system, and that the mobile phone and the in-vehicle navigation system are both located inside the vehicle, as shown in FIG. 2.FIG. 2 is a schematic diagram of a location service of application layers for multiple location management clients (LMCs) according to an embodiment of the present application. In case that LMC1, i.e., VAL server 1 to which the mobile phone belongs, has a location requirement, LMC1 may send a location request for LMC1 to LMS. After receiving the location request for LMC1, the LMS sends a location request to LMC1 to make LMC1 report the location information of LMC1 and send the reported location information to VAL server 1 to achieve location of LMC1. Similarly, in case that LMC2, i.e., VAL server 2 to which the in-vehicle navigation system belongs, has a location requirement, LMC2 may send a location request for LMC2 to LMS. After receiving the location request for LMC2, the LMS sends a location request to LMC2 to make LMC2 report location information of LMC2 and send the reported location information to VAL server 2 to achieve location of LMC2.

Using the positioning method described in FIG. 2, even if LMC1 and LMC2 are both in a same vehicle and the location information of LMC1 and LMC2 is the same and may be shared, the LMS may still execute the above positioning procedure and require LMC1 and LMC2 to report their respective location information, which may result in repeated reporting of the same location information. Especially for Internet of Things (IoT) terminals, frequent location information reporting may lead to a significant waste of signaling resources.

To save signaling resources, in the embodiments of the present application, after receiving a location request from the VAL server to which an LMC to be located belongs, the LMS does not need to send a location request directly to the LMC. Instead, the LMS first determines whether there is an LMC among the located LMCs that may share a same location with the LMC to be located. If it is determined that an LMC may share a same location with the LMC to be located, the location information of the LMC that may share a same location is sent to the VAL server to which the LMC to be located belongs to serve as the location information of the LMC to be located, which realizes the LMC location. In this way, there is no need to request the LMC to be located to report location information of the LMC to be located, which may effectively avoid the repeated reporting of the same location information, thereby saving signaling resources.

It should be noted that in the embodiments of the present application, the LMC with a shareable location and the LMC to be located are in the same location area, and the location information of the same location area is the same or approximately the same. Because the location information of the two LMCs is the same or approximately the same, the location information of one LMC may be used as the location information of the other LMC by sharing the location.

The solutions according to the present application are clearly and completely described below in combination with the accompanying drawings in the embodiments of the present application. It should be noted that the described embodiments are some embodiments of the present application, rather than all the embodiments. Based on the embodiments of the present application, all other embodiments obtained by those of ordinary skill in the art without creative effort are within the scope of protection of the present application.

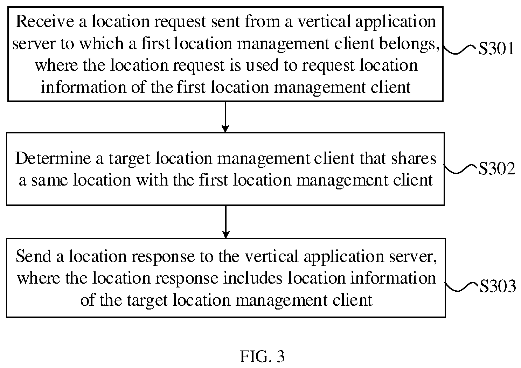

FIG. 3 is a first schematic flowchart of a positioning method for location management client according to an embodiment of the present application. The positioning method for location management client is performed by a location management server. For example, as shown in FIG. 3, the positioning method for location management client may include following steps.

S301: receive a location request sent from a vertical application server to which a first location management client belongs, where the location request is used to request location information of the first location management client.

The first location management client may be understood as the location management client to be located.

For example, in the embodiments of the present application, the location request may be a real-time triggered location request or a subscribed location request, i.e., a subscription location request, which may be set according to actual needs.

For example, in case that a location request is received from a vertical application server to which a location management client belongs, the location management client may be directly used as the first location management client. In case that multiple location requests are received from their respective vertical application servers, a first location management client may be selected from the multiple location management clients according to preset conditions, and the location information of the first location management client may be obtained. The preset conditions include at least one of following:
quality of service (QoS) of a requested location service;
a terminal type or a subscriber identity module (SIM) card type corresponding to a location management client;
an operator strategy; or
a pre-configuration.

To effectively avoid the repeated reporting of the same location information, in the embodiments of the present application, after receiving the location request sent from the vertical application server to which the first location management client belongs, the location management server first determines whether there is a target location management client among the location management clients that have been located and may share the same location with the first location management client. In case that there is no target location management client, the location management server sends a location request to the first location management client so that the first location management client reports location information of the first location management client. In case that there is a target location management client, the location management server executes the following S302 and S303.

S302: determine a target location management client that shares a same location with the first location management client.

The target location management is a location management client that has been located. In case of obtaining location information from the target location management client, the location information reported by the target location management client may be received. The location information of the target location management client is the same as or approximately the same as the location information of the first location management client to be located.

As an example, in the embodiments of the present application, in case of determining a target location management client that shares a same location with the first location management client, at least two of the following possible implementation methods are included.

In one possible implementation, considering that different location management clients belonging to the same terminal have the same location information, in case of determining the target location management client that may share the same location with the first location management client, whether there is a second location management client belonging to the same terminal as the first location management client may be first determined. In case that there is a second location management client belonging to the same terminal as the first location management client, then the second location management client is determined as the target location management client that may share the same location with the first location management client.

For example, in this possible implementation, the first location management client and the second location management client may be a subscriber identity module (SIM).

For example, in case of determining a second location management client that belongs to the same terminal as the first location management client, it is necessary to first determine whether the international mobile subscriber identity (IMSI) of the first location management client is the same as the IMSI of the second location management client. In case that the IMISI of the first location management client is the same as the IMISI of the second location management client, it is determined that the first location management client and the second location management client belong to the same terminal.

It should be understood that, in this possible implementation, the second location management client is the target location management client that may share the same location of the second location management client with the first location management client. For example, in the embodiments of the present application, the international mobile subscriber identity (IMSI) of the target location management client may be carried in the location service registration request sent from the target location management client, so that the location management server may obtain and record the IMSI of the target location management client.

Generally, any location management client, including the target location management client, may send a location service registration request to the location management server and receive a location service registration response from the location management server before positioning the location of location management client, thus completing the registration procedure for the location management client.

Taking a target location management client as an example, the target location management client may send a location service registration request to the location management server. For example, the location service registration request includes at least one of the following:
an international mobile subscriber identity of the target location management client;
an associated identity corresponding the target location management client;
a terminal type or an SIM card type corresponding to the target location management client; or
indication information, where the indication information is used to indicate whether to permit sharing the location information of the target location management client or not.

For example, in the embodiments of the present application, the associated identity corresponding to the first location management client may be a group identity corresponding to the first location management client, or may be other similar identities, which may be set according to actual needs.

Correspondingly, after receiving the location service registration request sent from the target location management client, the location management server may send the location service registration response to the location management client based on the location service registration request sent from the target location management client, thus completing the registration procedure for the location management client.

As can be seen, in this possible implementation, considering that the location information of different location management clients belonging to the same terminal is the same, by determining a second location management client belonging to the same terminal as the first location management client, determining the second location management client as a target location management client that may share the same location with the first location management client, and using the location information of the target location management client as the location information of the first location management client to be located, there is no need to request the first location management client to report the location information of the first location management client, which may effectively avoid the repeated reporting of the same location information, thereby saving signaling resources.

In another possible implementation, considering that different location management clients belonging to the same location area have the same location information, in case of determining the target location management client that may share the same location with the first location management client, it is possible to first determine whether there is a third location management client that is in the same location area as the first location management client. In case that there is a third location management client that is in the same location area as the first location management client, then the third location management client is determined as the target location management client that may share the same location with the first location management client.

For example, in this possible implementation, the first location management client may be a mobile phone in the vehicle, and the second location management client may be an in-vehicle navigation system in the vehicle. The first location management client may be a mobile phone at home, and the second location management client may be a smart speaker at home, etc., which may be set according to actual needs.

For example, in case of determining a third location management client that is in the same location area as the first location management client, at least two of the following methods may be included.

In one method, the location management server may autonomously determine whether there is a location management client in the same location area as the first location management client, to determine a third location management client in the same location area as the first location management client.

For example, in case that the location management server autonomously determines a third location management client that is in the same location area as the first location management client, the core network of the 3rd Generation Partnership Project may be queried based on the identity of the first location management client and the identity of the third location management client included in the location request, and the network query results may be obtained. In case that the network query results indicate that the first location management client and the third location management client are in the same location area, the third location management client that is in the same location area as the first location management client may be determined.

In another method, the location management server may determine a third location management client that is in the same location area as the first location management client by using the location management client that has been located.

In case that the location management server determines a third location management client through the location management client that has been located, associated location management clients from at least one location management client that has been located may be first determined based on the associated identity corresponding to the first location management client included in the location request, where an associated identity corresponding to the associated location management clients is the same as the associated identity corresponding to the first location management client; and a location sharing verification request may be sent to the associated location management clients, where the location sharing verification request includes an identity of the first location management client and/or the associated identity of the first location management client, and the location sharing verification request is used to request the associated location management clients to determine whether the associated location management clients are in the same location area as the first location management client or not.

For example, a location sharing verification request may be a "check colocated status with LMC" message. LMC represents a first location management client.

Considering that in some scenarios, the probability of location management clients with the same associated identity being in the same location area is relatively high, in the embodiments of the present application, at least one location management client that has been located may be filtered according to the associated identity to determine the associated location management clients with the same associated identity, and location sharing verification requests may be sent only to these associated location management clients. This may solve the problem of resource waste caused by sending location sharing verification requests to associated location management clients with different association identities to a certain extent. In an embodiment, a target location management client that may share a same location with the first location management client belongs to the associated location management client.

After receiving a location sharing verification request, the associated location management client determines the location sharing verification result based on the identity of the first location management client and/or the associated identity of the first location management client. For example, in the embodiments of the present application, in case of determining, based on the identity of the first location management client and/or the associated identity of the first location management client, the location sharing verification result, the associated location management client may output prompt information to a user based on the identity of the first location management client and/or the associated identity of the first location management client, where the prompt information is used to prompt the user to confirm that the first location management client is in the same location area as the target location management client, or the first location management client is not in the same location area as the target location management client; and in response to an operation of the user on the prompt information, the associated location management client may determine the location sharing verification result.

According to an embodiment of the present application, the associated location management client may establish, based on the identity of the first location management client and/or the associated identity of the first location management client, a sidelink connection with the first location management client; and in case that the sidelink connection is established, the associated location management client may determine, based on a distance between the first location management client and the associated location management client, the location sharing verification result.

The location sharing verification result includes whether the location is in the same location area as the first location management client or not.

After determining the location sharing verification result, the associated location management client sends a location sharing verification response to the location management server based on the location sharing verification result. For example, in case that the location sharing verification result includes being in the same location area as the first location management client, the location sharing verification response is used to indicate that the associated location management client is in the same location area as the first location management client. In case that the location sharing verification result includes not being in the same location area as the first location management client, the location sharing verification response is used to indicate that the associated location management client is not in the same location area as the first location management client.

Correspondingly, after receiving the location sharing verification response sent from the associated location management client, the location management server may determine, based on the location sharing verification response sent from the associated location management client, among the associated location management clients with the same associated identity, the third location management client that is in the same location area as the first location management client. The third location management client is the target location management client that may share same location information with the first location management client.

As an example, in the embodiments of the present application, in case that the location request is a subscription location request, the location request may further include a location duration and a location time interval of the first location management client, and before sending the location sharing verification request to the associated location management clients, the location management server may first send the location duration and the location time interval to the associated location management clients. Accordingly, the location duration and the location time interval are used by the associated location management clients to determine a preset time period, and during the preset time period, the associated location management clients and the first location management client are in the same location area. The preset time period is sent to the location management server. Accordingly, the location management server determines whether to send the location sharing verification request to the associated location management clients based on the preset time period.

For example, in case of determining whether to send the location sharing verification request to the associated location management client based on the preset time period, the location management server may first determine whether the current moment is within the preset time period. If it is determined that the current moment is within the preset time period, it means that the associated location management client and the first location management client are in the same location area, and therefore there is no need to send a location sharing verification request to the associated location management client. Conversely, if it is determined that the current moment is not within the preset time period, it means that it is uncertain whether the associated location management client and the first location management client are in the same location area, and therefore a location sharing verification request is sent to the associated location management client.

Based on the location sharing verification responses sent from the associated location management clients, from the associated location management clients having the same associated identity with the first location management client, the third location management client in the same location area as the first location management client is determined.

As can be seen, in this possible implementation, considering that the location information of different location management clients in the same location area is the same, by determining a third location management client that is in the same location area as the first location management client, determining the third location management client as a target location management client that may share the same location with the first location management client, and using the location information of the target location management client as the location information of the first location management client to be located, there is no need to request the first location management client to report the location information of the first location management client, which may effectively avoid the repeated reporting of the same location information, thereby saving signaling resources.

Based on the description in S302, after determining a target location management client that may share same location information with the first location management client, the location information of the target location management client may be sent as the location information of the first location management client to the vertical application server to which the first location management client belongs, i.e., S303 below is executed to achieve the positioning of the first location management client.

S303: send a location response to the vertical application server, where the location response includes location information of the target location management client.

For example, in the embodiments of the present application, the location registration request of the first location management client includes indication information. The indication information is used to indicate whether to permit sharing the location information of the target location management client. In case of sending a location response to the vertical application server, the location management server may first determine whether to permit sharing the location information of the target location management client based on the indication information. In case that the indication information indicates to permit sharing the location information of the target location management client, the location response is sent to the vertical application server.

According to an embodiment of the present application, the method includes: receiving a location request sent from a vertical application server to which a first location management client belongs; determining a target location management client that shares a same location with the first location management client and using location information of the target location management client as location information of the first location management client to be locate; and sending a location response to the vertical application server, where the location response includes location information of the target location management client. In this way, there is no need to request the first location management client to report the location information of the first location management, which may effectively avoid repeated reporting of the same location information, thereby saving signaling resources.

Based on the embodiment shown in FIG. 2 above, a location request is sent to the first location management client to achieve location of the first location management client in case that at least one of the following conditions is met. The conditions include at least one of following:
the location information of the target location management client failing to meet QoS of a vertical service;
not permitting sharing the location information of the target location management client; or
having no location management client in a same location area as the first location management client.

For the condition "the location information of the target location management client failing to meet QoS of a vertical service", it can be understood that although there is a target location management client that may share the same location with the first location management client, in case that the location information of the target location management client fails to meet the QoS of the vertical service, a location request may be sent to the first location management client so that the first location management client may report the location information of the first location management client.

For the condition "not permitting sharing the location information of the target location management client", it can be understood that although there is a target location management client that may share the same location with the first location management client, in case that sharing the location information of the target location management client is not permitted, a location request may be sent to the first location management client so that the first location management client may report the location information of the first location management client.

For the condition "having no location management client in a same location area as the first location management client", it can be understood that in case that there is no a target location management client that may share a same location with the first location management client, a location request may be sent to the first location management client so that the first location management client may report the location information of the first location management client.

To facilitate understanding the positioning method for the location management client provided in the present application, the following four embodiments may be used to describe the positioning method for the location management client provided in the present application in detail.

### Embodiment 1

Embodiment 1 provides a location management client LMC1 and a location management client LMC2. Location management client LMC1 is SIM card 1 and location management client LMC2 is SIM card 2. SIM card 1 and SIM card 2 belong to the same terminal. SIM card 1 is the primary card, and SIM card 2 is the secondary card; or, SIM card 1 has a higher priority than SIM card 2. Different SIM cards have different contracts, that is, different SIM cards have different general purpose serial interface (GPSI) numbers, or international mobile subscriber identity (IMSI) numbers, etc. VAL server 1 only requests the location information of LMC1, and VAL server 2 only requests the location information of LMC2.

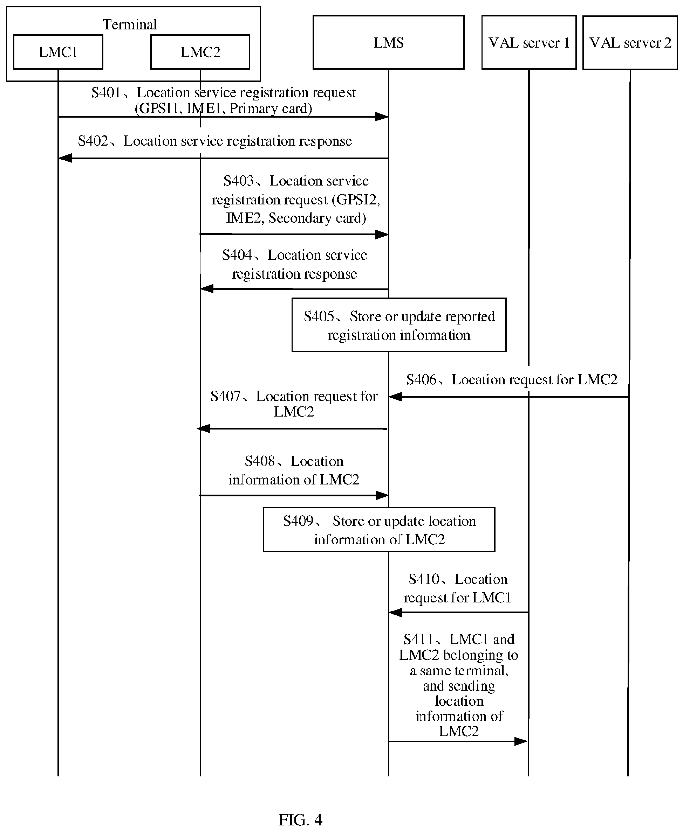

Suppose that the location management client to be located is LMC1, in case of locating the location of LMC1, for example, please refer to FIG. 4. FIG. 4 is a schematic flowchart of a positioning method for LMC1 according to an embodiment of the present application. The positioning method for LMC1 may include following steps.

S401: LMC1 sends a location service registration request to LMS.

As an example, the location service registration request may include the identity of the terminal to which LMC1 belongs (such as GPSI), the type of SIM card 1 (such as the primary card), the International Mobile Equipment Identity (IMEI) number of the terminal to which LMC1 belongs, the location capabilities LMC1 supports and other registration information.

S402: based on the location service registration request sent from LMC1, LMS authenticates LMC1. In case that the authentication is successful, the LMS returns a location service registration response to LMC1.

S403: LMC2 sends a location service registration request to the LMS.

As an example, the location service registration request may include the identity of the terminal to which LMC2 belongs (such as GPSI), the type of SIM card 2 (such as the primary card), the IMEI number of the terminal to which LMC2 belongs, the location capabilities LMC2 supports and other registration information.

S404: based on the location service registration request sent from LMC2, LMS authenticates LMC2. In case that the authentication is passed, the LMS returns a location service registration response to LMC2.

The location service registration procedure for LMC1 may be implemented through the above S401 and S402, and the location service registration procedure for LMC2 may be implemented through the above S403 and S404. It should be noted that there is no order between the location service registration procedure for LMC1 and the location service registration procedure for LMC2. Here, the embodiments of the present application are only used as an example to illustrate that the location service registration procedure for LMC1 is implemented first through the above-mentioned S401 and S402, and then the location service registration procedure for LMC2 is implemented through the above-mentioned S403 and S404. It does not mean that the embodiments of the present application are limited to this.

S405: based on the IMEIs in the respective location service registration requests from LMC1 and LMC2, LMS determines that LMC1 and LMC2 belong to the same terminal and stores or updates the registration information reported by LMC1 and LMC2.

LMC1 and LMC2 belong to the same terminal, which indicates that, between LMC1 and LMC2, the location information may be shared. It should be noted that in case that LMC1 and LMC2 belong to the same terminal, the location information of LMC1 and LMC2 may theoretically be shared. However, whether to permit sharing may be determined in combination with indication information, for example, the location registration request for LMC2 may further include the indication information, and the indication information is used to indicate whether to permit sharing of the location information of LMC2.

S406: VAL server 2 sends a location request for LMC2 to LMS.

For example, the location request of LMC2 may carry the identity of the terminal to which LMC2 belongs, such as GPSI2.

S407: after the authorization check of VAL server 2 is passed, LMS query the information stored in its own storage. In case that no location message for GPSI2 is found, a location request is sent to LMC2.

S408: LMC2 respond to the location request sent from LMS and report location information of LMC2.

S409: LMS stores or updates the location information reported by LMC2.

S410: VAL server 1 initiates a location request for LMC1 to LMS.

For example, the location request for LMC1 may carry the identity of the terminal to which LMC1 belongs, such as GPSI1, etc.

S411: after passing the authorization check of VAL server 2, the LMS queries its own stored information. If the LMS does not find the location message for GPSI2, since it has been previously determined that LMC1 and LMC2 belong to the same terminal based on GPSI1 and GPSI2, the location information of LMC1 and LMC2 may be shared, and the location information of LMC2 may be sent to VAL server 1.

In the above embodiment 1, after receiving the location request sent from VAL server 1 to which LMC1 belongs, since LMC1 and LMC2 belong to the same terminal and the location information of LMC1 and LMC2 may be shared, the location information of LMC2 may be directly sent to VAL server 1 to which LMC1 belongs to serve as the location information of LMC1. In this way, there is no need to request LMC1 to report the location information of LMC1, which may effectively avoid the repeated reporting of the same location information, thereby saving signaling resources.

### Embodiment 2

Embodiment 2 provides location management client LMC1 and location management client LMC2. Location management client LMC1 is a mobile phone, and location management client LMC2 is an in-vehicle navigation system. The mobile phone and the in-vehicle navigation system are in the same vehicle. The mobile phone also needs to be located. The mobile phone and the in-vehicle navigation system have been associated and have a same associated identity, such as a group identity. VAL server 1 only requests the location information of LMC1, and VAL server 2 only requests the location information of LMC2.

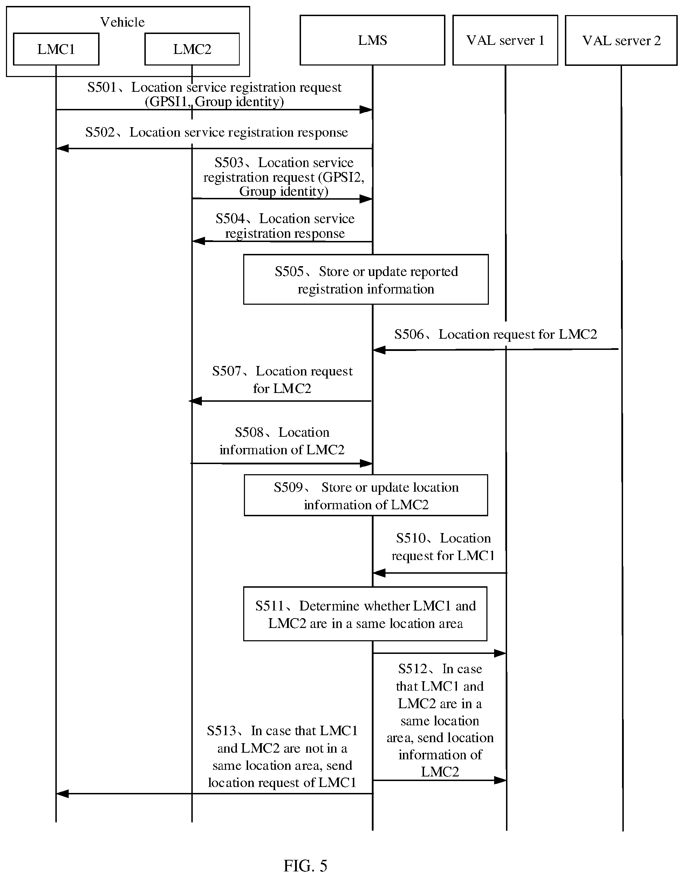

Suppose that the location management client to be located is LMC1, in case of locating the location of LMC1, for example, please refer to FIG. 5. FIG. 5 is another schematic flowchart of a positioning method for LMC1 according to an embodiment of the present application. The positioning method for LMC1 may include following steps.

S501: LMC1 sends a location service registration request to the LMS.

As an example, the location service registration request may include the identity of the terminal to which LMC1 belongs (such as GPSI), the group identity of LMC1, the terminal type corresponding to LMC1, indication used to indicate whether to permit sharing location information with other LMCs, and other registration information.

As an example, in case that the indication used to indicate whether to permit sharing location information with other LMCs is set to true, it means that LMC1 may share its location information in case that LMC1 is in the same location area as other LMCs. In case that the indication used to indicate whether to permit sharing location information with other LMCs is set to false, it means that LMC1 may not share its location information.

S502: based on the location service registration request sent from LMC1, LMS authenticates LMC1. In case that the authentication is passed, the LMS returns a location service registration response to LMC1.

S503: LMC2 sends a location service registration request to the LMS.

As an example, the location service registration request may include the identity of the terminal to which LMC2 belongs (such as GPSI), the group identity of LMC2, the terminal type corresponding to LMC2, indication used to indicate whether to permit sharing location information with other LMCs, and other registration information.

As an example, in case that the indication used to indicate whether to permit sharing location information with other LMCs is set to true, it means that LMC2 may share its location information in case that LMC2 is in the same location area as other LMCs. In case that the indication used to indicate whether to permit sharing location information with other LMCs is set to false, it means that LMC2 may not share its location information.

S504: based on the location service registration request sent from LMC2, LMS authenticates LMC2. In case that the authentication is passed, the LMS returns a location service registration response to LMC2.

The location service registration procedure for LMC1 may be implemented through the above S501 and S502, and the location service registration procedure for LMC2 may be implemented through the above S503 and S504. It should be noted that there is no order between the location service registration procedure for LMC1 and the location service registration procedure for LMC2. Here, the embodiments of the present application are only used as an example to illustrate that the location service registration procedure for LMC1 is implemented first through the above-mentioned S501 and S502, and then the location service registration procedure for LMC2 is implemented through the above-mentioned S503 and S504. It does not mean that the embodiments of the present application are limited to this.

S505: based on respective location service registration requests from LMC1 and LMC2, LMS determines that LMC1 and LMC2 belong to a same group and may be in the same location area, and stores or updates the registration information reported by LMC1 and LMC2.

In case that LMC1 and LMC2 are in the same location area, it means that the location information between LMC1 and LMC2 may be shared.

S506: VAL server 2 sends a location request for LMC2 to LMS.

For example, the location request for LMC2 may carry the identity of the terminal to which LMC2 belongs and the group identity.

S507: after the authorization check of VAL server 2 is passed, LMS query the information stored in its own storage. In case that no location message for GPSI2 is found, a location request is sent to LMC2.

S508: LMC2 respond to the location request sent from LMS and report location information of LMC2.

S509: LMS stores or updates the location information reported by LMC2.

S510: VAL server 1 initiates a location request for LMC1 to LMS.

For example, the location request for LMC1 may carry the identity of the terminal to which LMC1 belongs and the group identity.

S511: after the authorization check of VAL server 2 is passed, LMS queries its own stored information. In case that no location message for GPSI2 is found, and it was previously determined that LMC1 and LMC2 might be in the same location area based only on their respective group identity, then LMS further determines whether LMC1 and LMC2 are in the same location area independently; or LMS determines whether LMC1 and LMC2 are in the same location area through LMC2.

As an example, in case that LMS determines whether LMC1 and LMC2 are in the same location area independently, LMS may query the 3rd Generation Partnership Project core network and determine whether LMC1 and LMC2 are in the same location area based on the network query results.

As an example, in case that LMS determines whether LMC1 and LMC2 are in the same location area through LMC2, LMS may send a "check colocated status with LMC1" message to LMC2, carrying the identity of LMC1 and/or the group identity of LMC1, so that LMC2 may determine whether LMC1 and LMC2 are in the same location area.

As an example, in case of determining whether LMC1 and LMC2 are in the same location area through LMC2, at least two of the following possible methods may be included.

In one possible method, LMC2 may output a prompt message to the user based on the identity of LMC1 and/or the group identity of LMC1. The prompt message is used to prompt the user to confirm whether LMC1 and LMC2 are in the same location area; and in response to the operation of the user on the prompt message, LMC2 may determine whether LMC1 and LMC2 are in the same location area. That is, LMC2 requests the VAL client/user to query whether LMC1 and LMC2 are in the same location area, and determines whether LMC1 and LMC2 are in the same location area based on the query response.

In another possible method, LMC2 may establish a sidelink connection with LMC1 based on identity of LMC1 and/or the group identity of LMC1; and in case that a sidelink connection has been established, LMC2 may determine whether LMC1 and LMC2 are in the same location area based on the distance between LMC1 and LMC2.

S512: in case that it is determined that LMC1 and LMC2 are in the same location area and the location information of LMC1 and LMC2 may be shared, then the location information of LMC2 is sent to VAL server 1.

S513: in case that it is determined that LMC1 and LMC2 are not in the same location area and the location information of LMC1 and LMC2 may not be shared, a location request is sent to LMC1 so that LMC1 responds to the location request sent from LMS and reports the location information of LMC1, and then the location information reported from LMC1 is sent to VAL server 1.

In the above embodiment 2, after receiving the location request sent from VAL server 1 to which LMC1 belongs, since LMC1 and LMC2 are in the same location area and the location information of LMC1 and LMC2 may be shared, the location information of LMC2 may be directly sent to VAL server 1 to which LMC1 belongs to serve as the location information of LMC1. In this way, there is no need to request LMC1 to report the location information of LMC1, which may effectively avoid the repeated reporting of the same location information, thereby saving signaling resources.

### Embodiment 3

Embodiment 3 provides location management client LMC1, location management client LMC2, ..., and location management client LMCn. N location management clients are in-vehicle terminals, and n in-vehicle terminals are in the same vehicle. VAL server 1 only requests the location information of LMC1, while VAL server 2 requests the location information of LMC2, LMC3, ..., and LMCn.

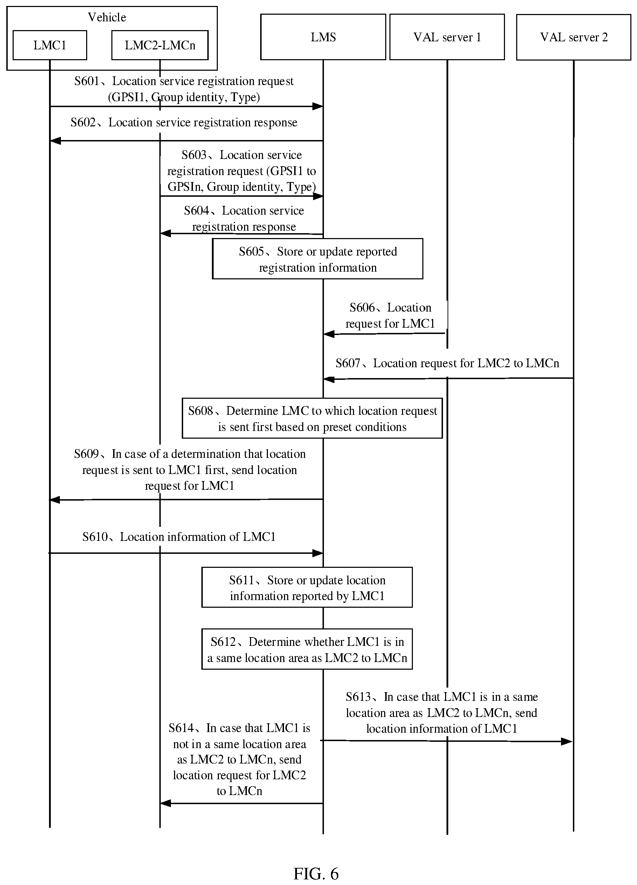

In case of locating n LMCs, for example, please refer to FIG. 6. FIG. 6 is a schematic flowchart of a positioning method for n LMCs according to an embodiment of the present application. The positioning method for LMC may include following steps.

S601: LMC1 sends a location service registration request to the LMS.

As an example, the location service registration request may include the identity of the terminal to which LMC1 belongs (such as GPSI), the group identity of LMC1, the terminal type corresponding to LMC1, indication used to indicate whether to permit sharing location information with other LMCs, and other registration information.

S602: based on the location service registration request sent from LMC1, LMS authenticates LMC1. In case that the authentication is passed, the LMS returns a location service registration response to LMC1.

S603: LMC2, LMC3, ..., and LMCn all send location service registration requests to LMS.

As an example, the location service registration requests sent from LMC2, LMC3, ..., and LMCn may include the identity of their respective terminals (such as GPSI), their respective types (such as primary cards), the IMEI numbers of their respective terminals, their supported location capabilities, and other registration information.

S604: based on the location service registration requests received from LMC2, LMC3, ..., and LMCn, LMS authenticates LMC2, LMC3, ..., and LMCn. In case that the authentication is passed, LMS returns a location service registration response to LMC2, LMC3, ..., and LMCn.

The location service registration procedure for LMC1 may be implemented through the above S601 and S602, and the respective location service registration procedure for LMC2, LMC3, ..., and LMCn may be implemented through the above S603 and S604. It should be noted that there is no order between the location service registration procedure for LMC1 and the location service registration procedure for LMC2, LMC3, ..., and LMCn. Here, the embodiments of the present application are only used as an example to illustrate that the location service registration procedure for LMC1 is implemented first through the above-mentioned S601 and S602, and then the location service registration procedure for LMC2, LMC3, ..., and LMCn is implemented through the above-mentioned S603 and S604. It does not mean that the embodiments of the present application are limited to this.

S605: based on the group identities in the respective location service registration requests of LMC1, LMC2, LMC3, ..., and LMCn, LMS determines that LMC1, LMC2, LMC3, ..., and LMCn belong to the same group and may be in the same location area, and stores or updates the registration information reported by LMC1, LMC2, LMC3, ..., and LMCn respectively.

In case that LMC1, LMC2, LMC3, ..., and LMCn are in the same location area, it means that the location information between LMC1, LMC2, LMC3, ..., and LMCn may be shared.

S606: LMS receives a location request for LMC1 sent from VAL server 1.

For example, the location request for LMC1 may include the identity of the terminal to which LMC1 belongs, the group identity of LMC 1, and QoS of the requested location service (LCS QoS).

S607: LMS receives location requests sent from VAL server 2 for LMC2, LMC3, ..., and LMCn.

For example, the location requests for LMC2, LMC3, ..., and LMCn may carry the identity of the terminal to which LMC2, LMC3, ..., and LMCn belong, their respective group identities, their respective device types, and their respective QoS of the requested location service (LCS QoS).

There is no order between S605 and S606. As an example, in the embodiments of the present application, S605 is first executed and then S606 is executed, but it does not mean that the embodiments of the present application are only limited to this.

S608: the LMS determines, from n LMCs, the LMC to which the location request is sent first based on preset conditions. The preset conditions include at least one of the following:
quality of service (QoS) of a requested location service;
a terminal type or an SIM card type corresponding to a location management client;
an operator strategy; or
a pre-configuration.

In the embodiments of the present application, in case of receiving location requests sent from respective VAL servers of n LMCS that may be in the same location area, it is possible to consider initiating positioning requests to only one or several LMCs based on preset conditions, which may effectively save signaling resources, reduce the power consumption of the terminals (especially for the IoT-type terminals) to which the LMCs belong, and play a role in energy conservation and efficiency improvement.

In case that it is determined to send a location request to LMC1 based on the preset conditions, S609-S6104 are executed. In case that it is determined to send a location request to a certain LMC among LMC2, LMC3, ..., and LMCn based on the preset conditions, such as LMCn, the following S615-S620 are executed.

S609: after the authorization check of VAL server 1 is passed, LMS query the information stored in its own storage. In case that no location message for GPSI1 is found, a location request is sent to LMC1.

S610: LMC1 respond to the location request sent from LMS and report location information of LMC2.

S611: LMS stores or updates the location information reported by LMC1.

S612: in case that LMS determines that LMC1, LMC2, LMC3, ..., and LMCn may be in the same location area, LMS may further autonomously determine whether LMC1 is in the same location area as LMC2, LMC3, ..., and LMCn; or, LMS may determine whether LMC1, LMC2, LMC3, ..., and LMCn are in the same location area through LMC1.

It should be noted that, in the embodiments of the present application, the method by which the LMS determines whether LMC1, LMC2, LMC3, ..., and LMCn may be in the same location area is similar to the method by which the LMS determines whether LMC1 and LMC2 are in the same location area in S511 above. Please refer to the relevant description in S511 above, which are not repeated in the embodiments of the present application.

S613: in case that it is determined that LMC1, LMC2, LMC3, ..., and LMCn are in the same location area and their location information may be shared, then it is determined whether the location information of LMC1 satisfies the LCS QoS of VAL server 1. In case that the location information of LMC1 satisfies the LCS QoS of VAL server 1, the location information of LMC1 is sent to VAL server 1. In case that the location information of LMC 1 fails to satisfy the LCS QoS of VAL server 1, the location information of LMC1 is requested again. In addition, it is determined whether the location information of LMC1 satisfies the LCS QoS of VAL server 2. In case that the location information of LMC1 satisfies the LCS QoS of VAL server 2, the location information of LMC1 is sent to VAL server 2. In case that the location information of LMC1 fails to satisfy the LCS QoS of VAL server 2, a location request is sent to LMC2, LMC3, ..., and LMCn so that LMC2, LMC3, ..., and LMCn respond to the location request sent from LMS and report their location information, and the location information reported by LMC2, LMC3, ..., and LMCn is sent to VAL server 2.

S614: in case that it is determined that LMC1, LMC2, LMC3, ..., and LMCn are not in the same location area and their location information may not be shared, then a location request is sent to LMC2, LMC3, ..., and LMCn so that LMC2, LMC3, ..., and LMCn respond to the location request sent by LMS and report their location information, and the location information reported by LMC2, LMC3, ..., and LMCn is sent to VAL server 2.

S615: in case that a location request is sent to LMCn based on preset conditions, after the LMS passes the authorization check of VAL server 2, LMS queries its own stored information. If LMS does not find a location message for GPSIn, LMS sends a location request to LMCn.

GPSIn is the identity of the terminal to which LMCn belongs.

S616: LMCn respond to the location request sent from LMS and report location information of LMCn.

S617: LMS stores or updates the location information reported by LMCn.

S618: in case that LMS determines that LMCn is in the same location area as LMC1, LMC2, LMC3, ..., and LMCn-1, LMS further autonomously determine whether LMCn and LMC1, LMC2, LMC3, ..., and LMCn-1 are in the same location area; or, LMS may determine whether LMCn and LMC1, LMC2, LMC3, ..., and LMCn-1 are in the same location area through LMC1.

It should be noted that, in the embodiments of the present application, the method by which LMS determines whether LMCn is in the same location area as LMC1, LMC2, LMC3, ..., and LMCn-1 is similar to the method by which LMS determines whether LMC1 and LMC2 are in the same location area in S511 above. Please refer to the relevant description in S511 above, which are not repeated in the embodiments of the present application.

S619: in case that it is determined that LMCn is in the same location area as LMC1, LMC2, LMC3, ..., and LMCn-1 and the location information of LMCn may be shared, then it is determined whether the location information of LMCn satisfies the LCS QoS of VAL server 2. In case that the location information of LMCn satisfies the LCS QoS of VAL server 2, the location information of LMCn is sent to VAL server 2. In case that the location information of LMCn fails to satisfy the LCS QoS of VAL server 2, the location information of LMCn is requested again. In addition, it is determined whether the location information of LMCn satisfies the LCS QoS of VAL server 1. In case that the location information of LMCn satisfies the LCS QoS of VAL server 1, the location information of LMCn is sent to VAL server 1. In case that the location information of LMCn fails to satisfy the LCS QoS of VAL server 1, a location request is sent to LMC1 so that LMC1 responds to the location request sent by LMS and reports the location information of LMC1, and then the location information reported by LMC1 is sent to VAL server 1.

S620: in case that it is determined that LMCn is not in the same location area as LMC1, LMC2, LMC3, ..., and LMCn-1 and the location information of LMCn may not be shared, then a location request is sent to LMC1, LMC2, LMC3, ..., and LMCn-1 to make LMC1, LMC2, LMC3, ..., and LMCn-1 respond to the location request sent from LMS and report their location information. The location information reported by LMC1 is sent to VAL server 1, and the location information reported by LMC2, LMC3, ..., and LMCn-1 is sent to VAL server 2.

It should be noted that, in the embodiments of the present application, considering the excessive steps in FIG. 6, steps S615-S620 are not shown in FIG. 6.

In the above embodiment 3, after receiving location requests from the VAL servers to which multiple LMCs belong at the same time, it may be determined from the multiple LMCs, to which LMC the location request is sent first according to preset conditions. In case that other LMCs are in the same location area as the LMC that is first located, and the location information of the LMC that is first located may be shared, the location information of the LMC that is first located may be directly sent to the VAL servers to which other LMCs belong, to serve as the location information of other LMCs. In this way, there is no need to request other LMCs to report their location information, which may effectively avoid the repeated reporting of the same location information, thereby saving signaling resources.

### Embodiment 4

Example 4 provides location management client LMC1, location management client LMC2, ..., and location management client LMCm. LMC1 is the in-vehicle positioning system, LMC2, LMC3, ..., and LMCm are positioning devices provided on sheep, and the positioning devices on m sheep are all in the same vehicle. VAL server 1 only requests the location information of LMC1, while VAL server 2 requests the location information of LMC2, LMC3, ..., and LMCm. The group identities of LMC1, LMC2, LMC3, ..., and LMCm are the same.

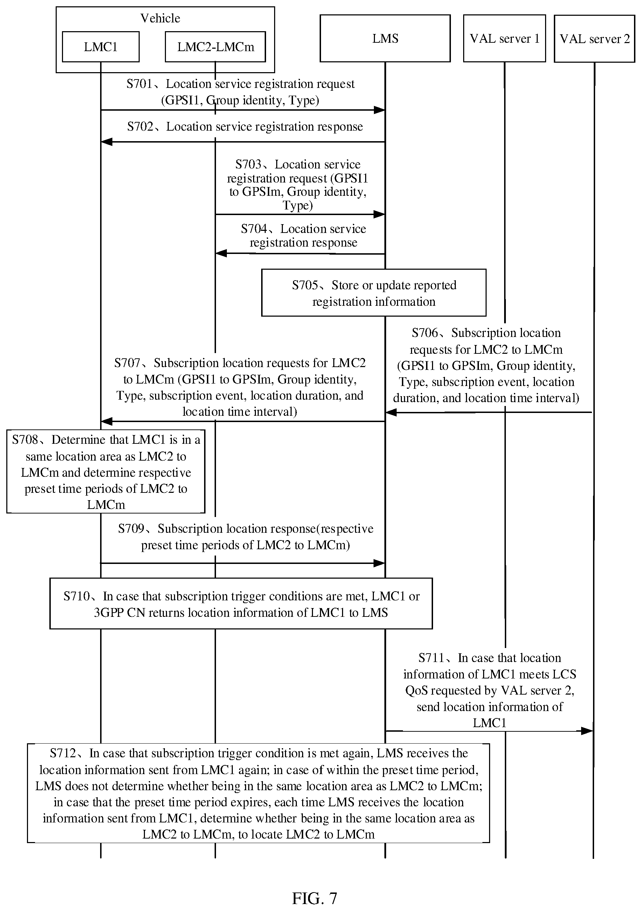

In case of locating m LMCs, for example, please refer to FIG. 7. FIG. 7 is a schematic flowchart of a positioning method for m LMCs according to an embodiment of the present application. The positioning method for the LMC may include following steps.

S701: LMC1 sends a location service registration request to the LMS.

As an example, the location service registration request may include the identity of the terminal to which LMC1 belongs (such as GPSI), the group identity of LMC1, the terminal type corresponding to LMC1, indication used to indicate whether to permit sharing location information with other LMCs, and other registration information.

S702: based on the location service registration request sent from LMC1, LMS authenticates LMC1. In case that the authentication is passed, the LMS returns a location service registration response to LMC1.

S703: LMC2, LMC3, ..., and LMCm all send location service registration requests to LMS.

As an example, the location service registration requests sent from LMC2, LMC3, ..., and LMCm may include the identity of their respective terminals (such as GPSI), their respective card types (such as primary cards), the IMEI number of their respective terminals, their supported location capabilities and other registration information.

S704: based on the location service registration requests received from LMC2, LMC3, ..., and LMCm, LMS authenticates LMC2, LMC3, ..., and LMCm. In case that the authentication is passed, LMS returns a location service registration response to LMC2, LMC3, ..., and LMCm.

The location service registration procedure for LMC1 may be implemented through the above S701 and S702, and the respective location service registration procedure for LMC2, LMC3, ..., and LMCm may be implemented through the above S703 and S704. It should be noted that there is no order between the location service registration procedure for LMC1 and the location service registration procedure for LMC2, LMC3, ..., and LMCm. Here, the embodiments of the present application are only used as an example to illustrate that the location service registration procedure for LMC1 is implemented first through the above-mentioned S701 and S702, and then the location service registration procedure for LMC2, LMC3, ..., and LMCm is implemented through the above-mentioned S703 and S704. It does not mean that the embodiments of the present application are limited to this.

S705: based on the group identities in the respective location service registration requests of LMC1, LMC2, LMC3, ..., and LMCm, LMS determines that LMC1, LMC2, LMC3, ..., and LMCm belong to the same group and may be in the same location area, and stores or updates the registration information reported by LMC1, LMC2, LMC3, ..., and LMCm respectively.

In case that LMC1, LMC2, LMC3, ..., and LMCm are in the same location region, it means that, among LMC1, LMC2, LMC3, ..., and LMCm, the location information may be shared.

S706: LMS receives subscription location requests sent from VAL server 2 for LMC2, LMC3, ..., and LMCm.

As an example, the subscription location request for LMC2, LMC3, ..., and LMCm may carry the identity of the terminal to which LMC2, LMC3, ..., and LMCm belong, the group identity of each of LMC2, LMC3, ..., and LMCm, the type of the terminal to which each of LMC2, LMC3, ..., and LMCm belongs, LCS QoS of the subscription location request, and the subscription conditions, where the subscription conditions include the subscription event, the location duration, and the location time interval.

The location duration indicates the time to locate the LMC. The location time interval may be understood as the triggering condition for the positioning operation.

S707: suppose that, based on preset conditions, LMS first sends subscription location requests for LMC2, LMC3, ..., and LMCm to LMC1 and 3GPP CN.

The 3GPP CN is not shown in FIG. 7.

S708: LMC1 or 3GPP CN determines that LMC1 is in the same location area as LMC2, LMC3, ..., and LMCm based on the subscription location requests for LMC2, LMC3, ..., and LMCm, and determines respective preset time periods based on the location durations and location time intervals of LMC2, LMC3, ..., and LMCm.

For example, within the preset time period corresponding to LMC3, LMC1 and LMC3 are in the same location area; within the preset time period corresponding to LMCm, LMCm and LMC3 are in the same location area.

S709: LMC1 returns a subscription location response to LMS.

As an example, the subscription location response includes respective preset time periods for LMC2, LMC3, ..., and LMCm.

S710: once the subscription trigger conditions are met, LMC1 or 3GPP CN returns the location information of LMC1 to LMS.

S711: in case that the location information of LMC1 meets the LCS QoS requested by VAL server 2, the location information of LMC1 is sent to VAL server 2.

S712: in case that the subscription trigger condition is met again, LMS may receive the location information sent from LMC1 again. In case of within the preset time period, LMS may not trigger LMC1 or 3GPP CN to determine whether LMC1 or 3GPP CN is in the same location area as LMC2, LMC3, ..., and LMCm, but instead, in case that the location information of LMC1 meets the LCS QoS requested by VAL server 2, LMS may send the location information of LMC1 to VAL server 2. In case that the preset time period expires, each time LMS receives the location information sent from LMC1, LMS may trigger LMC1 or 3GPP CN to determine whether LMC1 or 3GPP CN is in the same location area as LMC2, LMC3, ..., and LMCm, to locate LMC2, LMC3, ..., and LMCm.

In the above embodiment 4, after receiving subscription location requests from the VAL servers to which multiple LMCs belong at the same time, it may be determined from the multiple LMCs, to which LMC the subscription location request is sent first according to preset conditions. In case that other LMCs are in the same location area as the LMC that is first located, and the location information of the LMC that is first located may be shared, the location information of the LMC that is first located may be directly sent to the VAL servers to which other LMCs belong, to serve as the location information of other LMCs. In this way, there is no need to request other LMCs to report their location information, which may effectively avoid the repeated reporting of the same location information, thereby saving signaling resources.

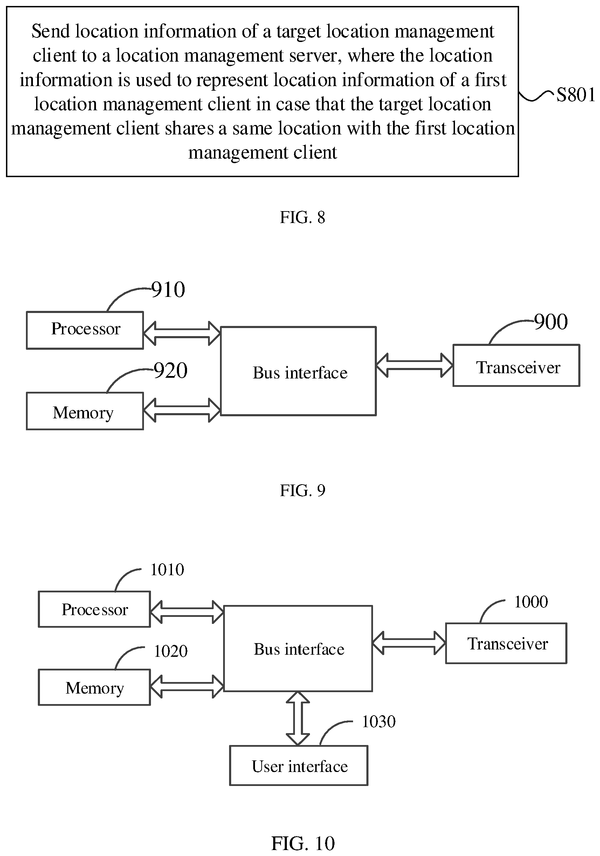

FIG. 8 is a second schematic flowchart of a positioning method for location management client according to an embodiment of the present application. The positioning method for location management client may be performed by a target location management client. For example, as shown in FIG. 8, the positioning method for location management client may include following steps.

S801: send location information of a target location management client to a location management server, where the location information is used to represent location information of a first location management client in case that the target location management client shares a same location with the first location management client.

For example, in the embodiments of the present application, the positioning method for location management client further includes:
sending a location service registration request to the location management server, where the location service registration request includes at least one of following:
an international mobile subscriber identity of the target location management client;
an associated identity corresponding to the target location management client;
a terminal type or an SIM card type corresponding to the target location management client; or
indication information, where the indication information is used to indicate whether to permit sharing the location information of the target location management client or not.

For example, in the embodiments of the present application, in case that the international mobile subscriber identity of the target location management client is the same as an international mobile subscriber identity of the first location management client, the target location management client shares the same location with the first location management client.

For example, in the embodiments of the present application, the positioning method for location management client further includes:
receiving a location sharing verification request sent from the location management server, where the location sharing verification request includes an identity of the first location management client and/or an associated identity of the first location management client;
determining, based on the identity of the first location management client and/or the associated identity of the first location management client, a location sharing verification result, where the location sharing verification result is used to indicate whether the first location management client is in a same location area as the target location management client or not; and
sending a location sharing verification response to the location management server, where the location sharing verification response includes the location sharing verification result.

For example, in the embodiments of the present application, the positioning method for location management client further includes:
receiving a location duration and a location time interval of the first location management client sent from the location management server;
determining, based on the location duration and the location time interval, a preset time period, where during the preset time period, the associated location management client and the first location management client are in the same location area; and
sending the preset time period to the location management server, where the preset time period is used to determine whether to send the location sharing verification request or not.

For example, in the embodiments of the present application, determining, based on the identity of the first location management client and/or the associated identity of the first location management client, the location sharing verification result includes:
outputting prompt information to a user based on the identity of the first location management client and/or the associated identity of the first location management client, where the prompt information is used to prompt the user to confirm whether the first location management client is in the same location area as the target location management client or not; and
in response to an operation of the user on the prompt information, determining the location sharing verification result.

For example, in the embodiments of the present application, determining, based on the identity of the first location management client and/or the associated identity of the first location management client, the location sharing verification result includes:
establishing, based on the identity of the first location management client and/or the associated identity of the first location management client, a sidelink connection with the first location management client; and
in case that the sidelink connection is established, determining, based on a distance between the first location management client and the target location management client, the location sharing verification result.

It should be understood that, in the embodiments of the present application, the specific implementation of the positioning method for location management client on the target location management client side is similar to the implementation of the positioning method for location management client on the location management server side in the above embodiments. Please refer to the specific implementation of the positioning method for the location management client on the location management server side in the above embodiments, which are not repeated in the embodiments of the present application.

FIG. 9 is a structural schematic diagram of a location management server according to an embodiment of the present application. As shown in FIG. 9, the location management server includes a memory 920, a transceiver 900, and a processor 910.

The memory 920 is used for storing a computer program; the transceiver 900 is used for receiving and sending data under control of the processor 910; and the processor 910 is used for reading the computer program in the memory 920 and performing the following operations:
receiving a location request sent from a vertical application server to which a first location management client belongs, where the location request is used to request location information of the first location management client;
determining a target location management client that shares a same location with the first location management client; and
sending a location response to the vertical application server, where the location response includes location information of the target location management client.

In an example, the transceiver 900 is used for receiving and sending data under control of the processor 910.

In FIG. 9, a bus architecture may include any number of interconnected buses and bridges, linking together by various circuits of one or more processors represented by processor 910 and memory represented by memory 920. The bus architecture may also link together various other circuits such as peripheral devices, voltage regulators, and power management circuits, which are all well known in the art and, therefore, will not be described further herein. The bus interface provides the interface. The transceiver 900 may be a plurality of components, including a transmitter and a receiver, providing a unit for communicating with various other devices over a transmission medium, such as a wireless channel, a wired channel, an optical cable, or the like. The processor 910 is responsible for managing the bus architecture and general processing, and the memory 920 may store data used by the processor 910 in case of performing operations.

The processor 910 may be a central processing unit (CPU), an application specific integrated circuit (ASIC), a field programmable gate array (FPGA), or a complex programmable logic device (CPLD). The processor may also adopt a multi-core architecture.

As an example, in the embodiments of the present application, in case of determining a target location management client that shares a same location with the first location management client, the operations include:
determining a second location management client that belongs to a same terminal as the first location management client; and
determining the second location management client as the target location management client.

As an example, in the embodiments of the present application, determining the second location management client that belongs to the same terminal as the first location management client includes:
in case that an international mobile subscriber identity of the first location management client is the same as an international mobile subscriber identity of the second location management client, determining that the first location management client and the second location management client belong to the same terminal.

As an example, in the embodiments of the present application, determining the target location management client that shares the same location with the first location management client includes:
determining a third location management client that is in a same location area as the first location management client; and
determining the third location management client as the target location management client.

As an example, in the embodiments of the present application, the location request includes an associated identity corresponding to the first location management client, and determining the third location management client that is in the same location area as the first location management client includes:
determining associated location management clients from at least one location management client that has been located, where an associated identity corresponding to the associated location management clients is the same as the associated identity corresponding to the first location management client;
sending a location sharing verification request to the associated location management clients, where the location sharing verification request includes an identity of the first location management client and/or the associated identity of the first location management client, and the location sharing verification request is used to request the associated location management clients to determine whether the associated location management clients are in the same location area as the first location management client or not; and
determining, based on location sharing verification responses sent from the associated location management clients, from the associated location management clients having the same associated identity with the first location management client, the third location management client that is in the same location area as the first location management client.

As an example, in the embodiments of the present application, the location request includes a location duration and a location time interval of the first location management client, and before sending the location sharing verification request to the associated location management clients, the method further includes:
sending the location duration and the location time interval to the associated location management clients, where the location duration and the location time interval are used by the associated location management clients to determine a preset time period, and during the preset time period, the associated location management clients and the first location management client are in the same location area; and
receiving the preset time period sent from the associated location management clients;
where sending the location sharing verification request to the associated location management clients includes:
   determining whether a current moment is within the preset time period; and
   in case of a determination that the associated location management clients are not within the preset time period, sending the location sharing verification request to the associated location management clients.

As an example, in the embodiments of the present application, the location request includes an identity of the first location management client, and determining the third location management client that is in the same location area as the first location management client includes:
querying, based on the identity of the first location management client and the identity of the third location management client, a core network of 3rd Generation Partner Program, and determining that the first location management client and the third location management client are in the same location area based on a network query result.

As an example, in the embodiments of the present application, the processor is further used to perform following operations:
in case of receiving location requests from vertical application servers to which multiple location management clients respectively belong, determining the first location management client from the multiple location management clients based on preset conditions, where the preset conditions include at least one of following:
quality of service (QoS) of a requested location service;
a terminal type or an SIM card type corresponding to a location management client;
an operator strategy; or
a pre-configuration.

As an example, in the embodiments of the present application, a location registration request of the first location management client includes indication information, where the indication information is used to indicate whether to permit sharing the location information of the target location management client, and sending the location response to the vertical application server includes:
in case that the indication information indicates whether to permit sharing the location information of the target location management client or not.

As an example, in the embodiments of the present application, the processor is further used to perform following operations:
receiving a location service registration request sent from the target location management client, where the location service registration request includes at least one of following:
an international mobile subscriber identity of the target location management client;
an associated identity corresponding to the target location management client;
a terminal type or an SIM card type corresponding to the target location management client; or
indication information, where the indication information is used to indicate whether to permit sharing the location information of the target location management client or not.

As an example, in the embodiments of the present application, the processor is further used to perform following operations:
in case of satisfying at least one of following conditions, sending the location request to the first location management client, where the conditions include:
the location information of the target location management client failing to meet QoS of a vertical service;
not permitting to share the location information of the target location management client; or
having no location management client in a same location area as the first location management client.

It should be noted here that the above-mentioned location management server provided in the embodiment of the present application may implement all the method steps implemented by the method embodiment in which the execution body is the location management server, and may achieve the same technical effect. The parts and beneficial effects of this embodiment that are the same as those of the method embodiment will not be described in detail here.

FIG. 10 is a structural schematic diagram of a target location management client according to an embodiment of the present application. As shown in FIG. 10, the target location management client includes a memory 1020, a transceiver 1000, and a processor 1010.

The memory 1020 is used for storing a computer program; the transceiver 1000 is used for receiving and sending data under control of the processor 1010; and the processor 1010 is used for reading the computer program in the memory 1020 and performing the following operations:
sending location information of the target location management client to a location management server, where the location information is used to represent location information of a first location management client in case that the target location management client shares a same location with the first location management client.

In an example, the transceiver 1000 is used for receiving and sending data under control of the processor 1010.

In FIG. 10, a bus architecture may include any number of interconnected buses and bridges, linking together by various circuits of one or more processors represented by processor 1010 and memory represented by memory 1020. The bus architecture may also link together various other circuits such as peripheral devices, voltage regulators, and power management circuits, which are all well known in the art and, therefore, will not be described further herein. The bus interface provides the interface. The transceiver 1000 may be a plurality of components, including a transmitter and a receiver, providing a unit for communicating with various other devices over a transmission medium, such as a wireless channel, a wired channel, an optical cable, or the like. For different user devices, the user interface 1030 may also be an interface capable of connecting to external or internal devices as required, and the connected devices include but are not limited to a keypad, a display, a speaker, a microphone, a joystick, and the like.

The processor 1010 is responsible for managing the bus architecture and general processing, and the memory 1020 may store data used by the processor 1010 in case of performing operations.

In an embodiment, the processor 1010 may be a central processing unit (CPU), an application specific integrated circuit (ASIC), a field programmable gate array (FPGA), or a complex programmable logic device (CPLD). The processor may also adopt a multi-core architecture.

The processor invokes the computer program stored in the memory to execute any of the methods provided in the embodiments of the present application according to the obtained executable instructions. The processor and memory may also be physically separated.

As an example, in the embodiments of the present application, the processor is further used to perform following operations:
sending a location service registration request to the location management server, where the location service registration request includes at least one of following:
an international mobile subscriber identity of the target location management client;
an associated identity corresponding to the target location management client;
a terminal type or an SIM card type corresponding to the target location management client; or
indication information, where the indication information is used to indicate whether to permit sharing the location information of the target location management client or not.

For example, in the embodiments of the present application, in case that the international mobile subscriber identity of the target location management client is the same as an international mobile subscriber identity of the first location management client, the target location management client shares the same location with the first location management client.

As an example, in the embodiments of the present application, the processor is further used to perform following operations:
receiving a location sharing verification request sent from the location management server, where the location sharing verification request includes an identity of the first location management client and/or an associated identity of the first location management client;
determining, based on the identity of the first location management client and/or the associated identity of the first location management client, a location sharing verification result, where the location sharing verification result is used to indicate whether the first location management client is in a same location area as the target location management client or not; and
sending a location sharing verification response to the location management server, where the location sharing verification response includes the location sharing verification result.

As an example, in the embodiments of the present application, the processor is further used to perform following operations:
receiving a location duration and a location time interval of the first location management client sent from the location management server;
determining, based on the location duration and the location time interval, a preset time period, where during the preset time period, the associated location management client and the first location management client are in the same location area; and
sending the preset time period to the location management server, where the preset time period is used to determine whether to send the location sharing verification request or not.

For example, in the embodiments of the present application, determining, based on the identity of the first location management client and/or the associated identity of the first location management client, the location sharing verification result includes:
outputting prompt information to a user based on the identity of the first location management client and/or the associated identity of the first location management client, where the prompt information is used to prompt the user to confirm whether the first location management client is in the same location area as the target location management client or not; and
in response to an operation of the user on the prompt information, determining the location sharing verification result.

For example, in the embodiments of the present application, determining, based on the identity of the first location management client and/or the associated identity of the first location management client, the location sharing verification result includes:
establishing, based on the identity of the first location management client and/or the associated identity of the first location management client, a sidelink connection with the first location management client; and
in case that the sidelink connection is established, determining, based on a distance between the first location management client and the target location management client, the location sharing verification result.

It should be noted here that the above-mentioned target location management client provided in the embodiment of the present application may implement all the method steps implemented by the method embodiment in which the execution body is the target location management client, and may achieve the same technical effect. The parts and beneficial effects of this embodiment that are the same as those of the method embodiment will not be described in detail here.

In addition, the present application also provides a positioning apparatus for location management client. The positioning apparatus and method for the location management client are based on the same application concept and have similar problem-solving principles. Therefore, as for the implementation of the positioning apparatus and method for the location management client, reference may be made to each other, and repeated details will not be repeated.

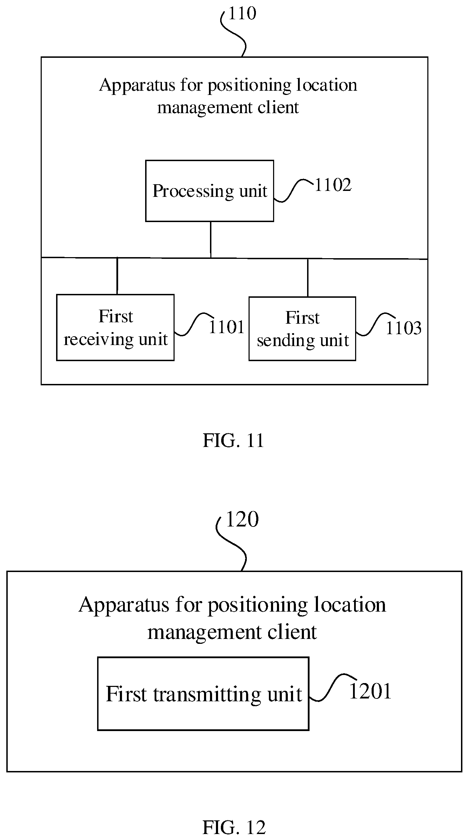

The embodiments of the present application also provide a positioning apparatus for location management client, for use in the location management server, as an example, please refer to FIG. 11. FIG. 11 is a first schematic flowchart of a positioning apparatus for location management client according to an embodiment of the present application. The positioning apparatus 110 for location management client includes:
a first receiving unit 1101, used for receiving a location request sent from a vertical application server to which a first location management client belongs, where the location request is used to request location information of the first location management client;
a processing unit 1102, used for determining a target location management client that shares a same location with the first location management client; and
a first sending unit 1103, used for sending a location response to the vertical application server, where the location response includes location information of the target location management client.

For example, in the embodiments of the present application, determining, the processing unit 1102 is used for determining a second location management client that belongs to a same terminal as the first location management client; and determining the second location management client as the target location management client.

For example, in the embodiments of the present application, the processing unit 1102 is used for, in case that an international mobile subscriber identity of the first location management client is the same as an international mobile subscriber identity of the second location management client, determining that the first location management client and the second location management client belong to the same terminal.

According to an embodiment of the present application, the processing unit 1102 is used for determining a third location management client that is in a same location area as the first location management client; and determining the third location management client as the target location management client.

For example, in the embodiments of the present application, the location request includes an associated identity corresponding to the first location management client, and the processing unit 1102 is used for:
determining associated location management clients from at least one location management client that has been located, where an associated identity corresponding to the associated location management clients is the same as the associated identity corresponding to the first location management client; sending a location sharing verification request to the associated location management clients, where the location sharing verification request includes an identity of the first location management client and/or the associated identity of the first location management client, and the location sharing verification request is used to request the associated location management clients to determine whether the associated location management clients are in the same location area as the first location management client or not; and determining, based on location sharing verification responses sent from the associated location management clients, from the associated location management clients having the same associated identity with the first location management client, the third location management client that is in the same location area as the first location management client.

For example, in the embodiments of the present application, the location request includes a location duration and a location time interval of the first location management client, and the apparatus 110 further includes a second sending unit and a second receiving unit;
the second sending unit is used for sending the location duration and the location time interval to the associated location management clients, where the location duration and the location time interval are used by the associated location management clients to determine a preset time period, and during the preset time period, the associated location management clients and the first location management client are in the same location area; and
the second receiving unit is used for receiving the preset time period sent from the associated location management clients;
where the processing unit 1102 is used for determining whether a current moment is within the preset time period; and in case of a determination that the associated location management clients are not within the preset time period, sending the location sharing verification request to the associated location management clients.

For example, in the embodiments of the present application, the location request includes an identity of the first location management client, and the processing unit 1102 is used for:
querying, based on the identity of the first location management client and the identity of the third location management client, a core network of 3rd Generation Partner Program, and determining that the first location management client and the third location management client are in the same location area based on a network query result.

For example, in the embodiments of the present application, the apparatus 110 further includes:
the processing unit 1102 is further used for, in case of receiving location requests from vertical application servers to which multiple location management clients respectively belong, determining the first location management client from the multiple location management clients based on preset conditions, where the preset conditions include at least one of following:
quality of service (QoS) of a requested location service;
a terminal type or an SIM card type corresponding to a location management client;
an operator strategy; or
a pre-configuration.

As an example, in the embodiments of the present application, a location registration request of the first location management client includes indication information, where the indication information is used to indicate whether to permit sharing the location information of the target location management client, and the sending unit is used for:
in case that the indication information indicates to permit sharing the location information of the target location management client, sending the location response to the vertical application server.

For example, in the embodiments of the present application, the apparatus 110 further includes a third receiving unit;
the third receiving unit is used for receiving a location service registration request sent from the target location management client, where the location service registration request includes at least one of following:
an international mobile subscriber identity of the target location management client;
an associated identity corresponding to the target location management client;
a terminal type or an SIM card type corresponding to the target location management client; or
indication information, where the indication information is used to indicate whether to permit sharing the location information of the target location management client or not.

For example, in the embodiments of the present application, the apparatus 110 further includes a fourth sending unit;
the fourth sending unit is used for, in case of satisfying at least one of following conditions, sending the location request to the first location management client, where the conditions include:
the location information of the target location management client failing to meet QoS of a vertical service;
not permitting sharing the location information of the target location management client; or
having no location management client in a same location area as the first location management client.

It should be noted here that the above-mentioned the positioning apparatus 110 for location management client provided in the embodiment of the present application may implement all the method steps implemented by the method embodiment in which the execution body is the location management server, and may achieve the same technical effect. The parts and beneficial effects of this embodiment that are the same as those of the method embodiment will not be described in detail here.

The embodiments of the present application further provide a positioning apparatus for location management client, for use in the target location management client, as an example, please refer to FIG. 12. FIG. 12 is a second schematic flowchart of a positioning apparatus for location management client according to an embodiment of the present application. The positioning apparatus 120 for location management client includes:
a first transmitting unit 1201, used for sending location information of the target location management client to a location management server, where the location information is used to represent location information of a first location management client in case that the target location management client shares a same location with the first location management client.

For example, in the embodiments of the present application, the apparatus 120 further includes a second sending unit and the second sending unit is used for:
sending a location service registration request to the location management server, where the location service registration request includes at least one of following:
an international mobile subscriber identity of the target location management client;
an associated identity corresponding to the target location management client;
a terminal type or an SIM card type corresponding to the target location management client; or
indication information, where the indication information is used to indicate whether to permit sharing the location information of the target location management client or not.

For example, in the embodiments of the present application, in case that the international mobile subscriber identity of the target location management client is the same as an international mobile subscriber identity of the first location management client, the target location management client shares the same location with the first location management client.

For example, in the embodiments of the present application, the apparatus 120 further includes a first receiving unit, a first processing unit, and a third sending unit;
the first receiving unit is used for receiving a location sharing verification request sent from the location management server, where the location sharing verification request includes an identity of the first location management client and/or an associated identity of the first location management client;
the first processing unit is used for determining, based on the identity of the first location management client and/or the associated identity of the first location management client, a location sharing verification result, where the location sharing verification result is used to indicate whether the first location management client is in a same location area as the target location management client or not; and
the third sending unit is used for sending a location sharing verification response to the location management server, where the location sharing verification response includes the location sharing verification result.

For example, in the embodiments of the present application, the apparatus 120 further includes a second receiving unit, a second processing unit, and a fourth sending unit;
the second receiving unit is used for receiving a location duration and a location time interval of the first location management client sent from the location management server;
the second processing unit is used for determining, based on the location duration and the location time interval, a preset time period, where during the preset time period, the associated location management client and the first location management client are in the same location area; and
the fourth sending unit is used for sending the preset time period to the location management server, where the preset time period is used to determine whether to send the location sharing verification request or not.

For example, in the embodiments of the present application, the first processing unit is used for outputting prompt information to a user based on the identity of the first location management client and/or the associated identity of the first location management client, where the prompt information is used to prompt the user to confirm that the first location management client is in the same location area as the target location management client, or the first location management client is not in the same location area as the target location management client; and in response to an operation of the user on the prompt information, determining the location sharing verification result.

For example, in the embodiments of the present application, the first processing unit is used for establishing, based on the identity of the first location management client and/or the associated identity of the first location management client, a sidelink connection with the first location management client; and in case that the sidelink connection is established, determining, based on a distance between the first location management client and the target location management client, the location sharing verification result.

It should be noted here that the above-mentioned the positioning apparatus 120 for location management client provided in the embodiment of the present application may implement all the method steps implemented by the method embodiment in which the execution body is the target location management client, and may achieve the same technical effect. The parts and beneficial effects of this embodiment that are the same as those of the method embodiment will not be described in detail here.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as USB flash disk, mobile hard disk, read-only memory (ROM), random access memory (RAM), magnetic disk, or optical disk.

According to another embodiment of the present application, a processor readable storage medium is provided, where the processor readable storage medium stores computer programs that cause a processor to perform the method provided in the above-mentioned embodiments. The method includes: receiving a location request sent from a vertical application server to which a first location management client belongs, where the location request is used to request location information of the first location management client; sending a location response to the vertical application server, where the location response includes location information of the target location management client.

Or, the method includes: sending location information of a target location management client to a location management server, where the location information is used to represent location information of a first location management client in case that the target location management client shares a same location with the first location management client.

In an embodiment, the computer readable storage medium may be any available medium or data storage device that may be accessed by the computer, including but not limited to, a magnetic storage (e.g., a floppy disk, a hard disk, a magnetic tape, a magnetooptical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As well appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory that may direct a computer or other programmable data processing device to operate in a specific manner, so that the instructions stored in the processor-readable memory produce a product including an instruction device that implements the functions specified in one or more processes in the flowchart and/or one or more blocks of the block diagram.

These processor-executable instructions may be loaded onto a computer or other programmable data processing device to cause a series of operational steps to be performed on the computer or other programmable device to produce a computer-implemented process and instructions performed on the computer or other programmable devices provide steps for performing the functions specified in one or more flows in the flowchart and/or one or more blocks of the block diagram.

It should be noted that those skilled in the art may make various modifications and variations to the present application without departing from the scope of the present application. If these modifications and variations on the present application are within the scope of the claims of the present application and their equivalent solutions, the present application is also intended to cover such modifications and variations.

## Claims

1. A positioning method for location management client, performed by a location management server, comprising:
receiving a location request sent from a vertical application server to which a first location management client belongs, wherein the location request is used to request location information of the first location management client;
determining a target location management client that shares a same location with the first location management client; and
sending a location response to the vertical application server, wherein the location response comprises location information of the target location management client.

2. The positioning method of claim 1, wherein determining the target location management client that shares the same location with the first location management client comprises:
determining a second location management client that belongs to a same terminal as the first location management client; and
determining the second location management client as the target location management client.

3. The positioning method of claim 2, wherein determining the second location management client that belongs to the same terminal as the first location management client comprises:
in case that an international mobile subscriber identity of the first location management client is the same as an international mobile subscriber identity of the second location management client, determining that the first location management client and the second location management client belong to the same terminal.

4. The positioning method of claim 1, wherein determining the target location management client that shares the same location with the first location management client comprises:
determining a third location management client that is in a same location area as the first location management client; and
determining the third location management client as the target location management client.

5. The positioning method of claim 4, wherein the location request comprises an associated identity corresponding to the first location management client, and determining the third location management client that is in the same location area as the first location management client comprises:
determining associated location management clients from at least one location management client that has been located, wherein an associated identity corresponding to the associated location management clients is the same as the associated identity corresponding to the first location management client;
sending a location sharing verification request to the associated location management clients, wherein the location sharing verification request comprises an identity of the first location management client and/or the associated identity of the first location management client, and the location sharing verification request is used to request the associated location management clients to determine whether the associated location management clients are in the same location area as the first location management client or not; and
determining, based on location sharing verification responses sent from the associated location management clients, from the associated location management clients having the same associated identity with the first location management client, the third location management client that is in the same location area as the first location management client.

6. The positioning method of claim 5, wherein the location request comprises a location duration and a location time interval of the first location management client, and before sending the location sharing verification request to the associated location management clients, the method further comprises:
sending the location duration and the location time interval to the associated location management clients, wherein the location duration and the location time interval are used by the associated location management clients to determine a preset time period, and during the preset time period, the associated location management clients and the first location management client are in the same location area; and
receiving the preset time period sent from the associated location management clients;
wherein sending the location sharing verification request to the associated location management clients comprises:
in case of a determination that the associated location management clients are not within the preset time period, sending the location sharing verification request to the associated location management clients.

7. The positioning method of claim 4, wherein the location request comprises an identity of the first location management client, and determining the third location management client that is in the same location area as the first location management client comprises:
querying, based on the identity of the first location management client and an identity of the third location management client, a core network of 3rd Generation Partner Program, and determining that the first location management client and the third location management client are in the same location area based on a network query result.

8. The positioning method of any of claims 1 to 7, further comprising:
in case of receiving location requests from vertical application servers to which multiple location management clients respectively belong, determining the first location management client from the multiple location management clients based on preset conditions, wherein the preset conditions comprise at least one of following:
quality of service, QoS, of a requested location service;
a terminal type or a subscriber identity module, SIM, card type corresponding to a location management client;
an operator strategy; or
a pre-configuration.

9. The positioning method of any of claims 1 to 7, wherein a location registration request of the first location management client comprises indication information, and sending the location response to the vertical application server comprises:
in case that the indication information indicates to permit sharing the location information of the target location management client, sending the location response to the vertical application server.

10. The positioning method of any of claims 1 to 7, further comprising:
receiving a location service registration request sent from the target location management client, wherein the location service registration request comprises at least one of following:
an international mobile subscriber identity of the target location management client;
an associated identity corresponding to the target location management client;
a terminal type or a subscriber identity module, SIM, card type corresponding to the target location management client; or
indication information, wherein the indication information is used to indicate whether to permit sharing the location information of the target location management client or not.

11. The positioning method of any of claims 1 to 7, further comprising:
in case of satisfying at least one of following conditions, sending the location request to the first location management client, wherein the conditions comprise:
the location information of the target location management client failing to meet quality of service, QoS, of a vertical service;
not permitting sharing the location information of the target location management client; or
having no location management client in a same location area as the first location management client.

12. A positioning method for location management client, performed by a target location management client, comprising:
sending location information of the target location management client to a location management server, wherein the location information is used to represent location information of a first location management client in case that the target location management client shares a same location with the first location management client.

13. The positioning method of claim 12, further comprising:
sending a location service registration request to the location management server, wherein the location service registration request comprises at least one of following:
an international mobile subscriber identity of the target location management client;
an associated identity corresponding to the target location management client;
a terminal type or a subscriber identity module, SIM, card type corresponding to the target location management client; or
indication information, wherein the indication information is used to indicate whether to permit sharing the location information of the target location management client or not.

14. The positioning method of claim 13, wherein
in case that the international mobile subscriber identity of the target location management client is the same as an international mobile subscriber identity of the first location management client, the target location management client shares the same location with the first location management client.

15. The positioning method of claim 12 or 13, further comprising:
receiving a location sharing verification request sent from the location management server, wherein the location sharing verification request comprises an identity of the first location management client and/or an associated identity of the first location management client;
determining, based on the identity of the first location management client and/or the associated identity of the first location management client, a location sharing verification result, wherein the location sharing verification result is used to indicate whether the first location management client is in a same location area as the target location management client or not; and
sending a location sharing verification response to the location management server, wherein the location sharing verification response comprises the location sharing verification result.

16. The positioning method of claim 15, further comprising:
receiving a location duration and a location time interval of the first location management client sent from the location management server;
determining, based on the location duration and the location time interval, a preset time period, wherein during the preset time period, the associated location management client and the first location management client are in the same location area; and
sending the preset time period to the location management server, wherein the preset time period is used to determine whether to send the location sharing verification request or not.

17. The positioning method of claim 15, wherein determining, based on the identity of the first location management client and/or the associated identity of the first location management client, the location sharing verification result comprises:
outputting prompt information to a user based on the identity of the first location management client and/or the associated identity of the first location management client, wherein the prompt information is used to prompt the user to confirm whether the first location management client is in the same location area as the target location management client or not; and
in response to an operation of the user on the prompt information, determining the location sharing verification result.

18. The positioning method of claim 15, wherein determining, based on the identity of the first location management client and/or the associated identity of the first location management client, the location sharing verification result comprises:
establishing, based on the identity of the first location management client and/or the associated identity of the first location management client, a sidelink connection with the first location management client; and
in case that the sidelink connection is established, determining, based on a distance between the first location management client and the target location management client, the location sharing verification result.

19. A location management server, comprising: a memory, a transceiver, and a processor:
wherein the memory is used for storing a computer program; the transceiver is used for receiving and sending data under control of the processor; and the processor is used for reading the computer program in the memory and performing following operations:
receiving a location request sent from a vertical application server to which a first location management client belongs, wherein the location request is used to request location information of the first location management client;
determining a target location management client that shares a same location with the first location management client; and
sending a location response to the vertical application server, wherein the location response comprises location information of the target location management client.

20. The location management server of claim 19, wherein determining the target location management client that shares the same location with the first location management client comprises:
determining a second location management client that belongs to a same terminal as the first location management client; and
determining the second location management client as the target location management client.

21. The location management server of claim 20, wherein determining the second location management client that belongs to the same terminal as the first location management client comprises:
in case that an international mobile subscriber identity of the first location management client is the same as an international mobile subscriber identity of the second location management client, determining that the first location management client and the second location management client belong to the same terminal.

22. The location management server of claim 19, wherein determining the target location management client that shares the same location with the first location management client comprises:
determining a third location management client that is in a same location area as the first location management client; and
determining the third location management client as the target location management client.

23. The location management server of claim 22, wherein the location request comprises an associated identity corresponding to the first location management client, and determining the third location management client that is in the same location area as the first location management client comprises:
determining associated location management clients from at least one location management client that has been located, wherein an associated identity corresponding to the associated location management clients is the same as the associated identity corresponding to the first location management client;
sending a location sharing verification request to the associated location management clients, wherein the location sharing verification request comprises an identity of the first location management client and/or the associated identity of the first location management client, and the location sharing verification request is used to request the associated location management clients to determine whether the associated location management clients are in the same location area as the first location management client or not; and
determining, based on location sharing verification responses sent from the associated location management clients, from the associated location management clients having the same associated identity with the first location management client, the third location management client that is in the same location area as the first location management client.

24. The location management server of claim 23, wherein the location request comprises a location duration and a location time interval of the first location management client, and before sending the location sharing verification request to the associated location management clients, the processor is further used to perform following operations:
sending the location duration and the location time interval to the associated location management clients, wherein the location duration and the location time interval are used by the associated location management clients to determine a preset time period, and during the preset time period, the associated location management clients and the first location management client are in the same location area; and
receiving the preset time period sent from the associated location management clients;
wherein sending the location sharing verification request to the associated location management clients comprises:
in case of a determination that the associated location management clients are not within the preset time period, sending the location sharing verification request to the associated location management clients.

25. The location management server of claim 22, wherein the location request comprises an identity of the first location management client, and determining the third location management client that is in the same location area as the first location management client comprises:
querying, based on the identity of the first location management client and an identity of the third location management client, a core network of 3rd Generation Partner Program, and determining that the first location management client and the third location management client are in the same location area based on a network query result.

26. The location management server of any of claims 19 to 25, wherein the processor is further used to perform following operations:
in case of receiving location requests from vertical application servers to which multiple location management clients respectively belong, determining the first location management client from the multiple location management clients based on preset conditions, wherein the preset conditions comprise at least one of following:
quality of service, QoS, of a requested location service;
a terminal type or a subscriber identity module, SIM, card type corresponding to a location management client;
an operator strategy; or
a pre-configuration.

27. The location management server of any of claims 19 to 25, wherein a location registration request of the first location management client comprises indication information, and sending the location response to the vertical application server comprises:
in case that the indication information indicates to permit sharing the location information of the target location management client, sending the location response to the vertical application server.

28. The location management server of any of claims 19 to 25, wherein the processor is further used to perform following operations:
receiving a location service registration request sent from the target location management client, wherein the location service registration request comprises at least one of following:
an international mobile subscriber identity of the target location management client;
an associated identity corresponding to the target location management client;
a terminal type or a subscriber identity module, SIM, card type corresponding to the target location management client; or
indication information, wherein the indication information is used to indicate whether to permit sharing the location information of the target location management client or not.

29. The location management server of any of claims 19 to 25, wherein the processor is further used to perform following operations:
in case of satisfying at least one of following conditions, sending the location request to the first location management client, wherein the conditions comprise:
the location information of the target location management client failing to meet quality of service, QoS, of a vertical service;
not permitting to share the location information of the target location management client; or
having no location management client in a same location area as the first location management client.

30. A target location management client, comprising: a memory, a transceiver, and a processor:
wherein the memory is used for storing a computer program; the transceiver is used for receiving and sending data under control of the processor; and the processor is used for reading the computer program in the memory and performing the following operations:
sending location information of the target location management client to a location management server, wherein the location information is used to represent location information of a first location management client in case that the target location management client shares a same location with the first location management client.

31. The target location management client of claim 30, wherein the processor is further used to perform following operations:
sending a location service registration request to the location management server, wherein the location service registration request comprises at least one of following:
an international mobile subscriber identity of the target location management client;
an associated identity corresponding to the target location management client;
a terminal type or a subscriber identity module, SIM, card type corresponding to the target location management client; or
indication information, wherein the indication information is used to indicate whether to permit sharing the location information of the target location management client or not.

32. The target location management client of claim 31, wherein
in case that the international mobile subscriber identity of the target location management client is the same as an international mobile subscriber identity of the first location management client, the target location management client shares the same location with the first location management client.

33. The target location management client of claim 30 or 31, wherein the processor is further used to perform following operations:
receiving a location sharing verification request sent from the location management server, wherein the location sharing verification request comprises an identity of the first location management client and/or an associated identity of the first location management client;
determining, based on the identity of the first location management client and/or the associated identity of the first location management client, a location sharing verification result, wherein the location sharing verification result is used to indicate whether the first location management client is in a same location area as the target location management client or not; and
sending a location sharing verification response to the location management server, wherein the location sharing verification response comprises the location sharing verification result.

34. The target location management client of claim 33, wherein the processor is further used to perform following operations:
receiving a location duration and a location time interval of the first location management client sent from the location management server;
determining, based on the location duration and the location time interval, a preset time period, wherein during the preset time period, the associated location management client and the first location management client are in the same location area; and
sending the preset time period to the location management server, wherein the preset time period is used to determine whether to send the location sharing verification request or not.

35. The target location management client of claim 33, wherein determining, based on the identity of the first location management client and/or the associated identity of the first location management client, the location sharing verification result comprises:
outputting prompt information to a user based on the identity of the first location management client and/or the associated identity of the first location management client, wherein the prompt information is used to prompt the user to confirm whether the first location management client is in the same location area as the target location management client or not; and
in response to an operation of the user on the prompt information, determining the location sharing verification result.

36. The target location management client of claim 33, wherein determining, based on the identity of the first location management client and/or the associated identity of the first location management client, the location sharing verification result comprises:
establishing, based on the identity of the first location management client and/or the associated identity of the first location management client, a sidelink connection with the first location management client; and
in case that the sidelink connection is established, determining, based on a distance between the first location management client and the target location management client, the location sharing verification result.

37. A positioning apparatus for location management client, for use in a location management server, comprising:
a first receiving unit, used for receiving a location request sent from a vertical application server to which a first location management client belongs, wherein the location request is used to request location information of the first location management client;
a processing unit, used for determining a target location management client that shares a same location with the first location management client; and
a first sending unit, used for sending a location response to the vertical application server, wherein the location response comprises location information of the target location management client.

38. The positioning apparatus of claim 37, wherein the processing unit is further used for:
determining a second location management client that belongs to a same terminal as the first location management client; and
determining the second location management client as the target location management client.

39. The positioning apparatus of claim 38, wherein the processing unit is further used for:
in case that an international mobile subscriber identity of the first location management client is the same as an international mobile subscriber identity of the second location management client, determining that the first location management client and the second location management client belong to the same terminal.

40. The positioning apparatus of claim 37, wherein the processing unit is further used for:
determining a third location management client that is in a same location area as the first location management client; and
determining the third location management client as the target location management client.

41. The positioning apparatus of claim 40, wherein the location request comprises an associated identity corresponding to the first location management client, and the processing unit is used for:
determining associated location management clients from at least one location management client that has been located, wherein an associated identity corresponding to the associated location management clients is the same as the associated identity corresponding to the first location management client; sending a location sharing verification request to the associated location management clients, wherein the location sharing verification request comprises an identity of the first location management client and/or the associated identity of the first location management client, and the location sharing verification request is used to request the associated location management clients to determine whether the associated location management clients are in the same location area as the first location management client or not; and determining, based on location sharing verification responses sent from the associated location management clients, from the associated location management clients having the same associated identity with the first location management client, the third location management client that is in the same location area as the first location management client.

42. The positioning apparatus of claim 41, the location request comprises a location duration and a location time interval of the first location management client, and the apparatus further comprises a second sending unit and a second receiving unit;
the second sending unit is used for sending the location duration and the location time interval to the associated location management clients, wherein the location duration and the location time interval are used by the associated location management clients to determine a preset time period, and during the preset time period, the associated location management clients and the first location management client are in the same location area; and
the second receiving unit is used for receiving the preset time period sent from the associated location management clients;
wherein the processing unit is used for, in case of a determination that the associated location management clients are not within the preset time period, sending the location sharing verification request to the associated location management clients.

43. The positioning apparatus of claim 40, wherein the location request comprises an identity of the first location management client, and the processing unit is used for:
querying, based on the identity of the first location management client and an identity of the third location management client, a core network of 3rd Generation Partner Program, and determining that the first location management client and the third location management client are in the same location area based on a network query result.

44. The positioning apparatus of any of claims 37 to 43, wherein
the processing unit is further used for, in case of receiving location requests from vertical application servers to which multiple location management clients respectively belong, determining the first location management client from the multiple location management clients based on preset conditions, wherein the preset conditions comprise at least one of following:
quality of service, QoS, of a requested location service;
a terminal type or a subscriber identity module, SIM, card type corresponding to a location management client;
an operator strategy; or
a pre-configuration.

45. The positioning apparatus of any of claims 37 to 43, wherein a location registration request of the first location management client comprises indication information, and the sending unit is further used for:
in case that the indication information indicates to permit sharing the location information of the target location management client, sending the location response to the vertical application server.

46. The positioning apparatus of any of claims 37 to 43, wherein the apparatus further comprises a third receiving unit;
the third receiving unit is used for receiving a location service registration request sent from the target location management client, wherein the location service registration request comprises at least one of following:
an international mobile subscriber identity of the target location management client;
an associated identity corresponding to the target location management client;
a terminal type or a subscriber identity module, SIM, card type corresponding to the target location management client; or
indication information, wherein the indication information is used to indicate whether to permit sharing the location information of the target location management client or not.

47. The positioning apparatus of any of claims 37 to 43, wherein the apparatus further comprises a fourth sending unit;
the fourth sending unit is used for, in case of satisfying at least one of following conditions, sending the location request to the first location management client, wherein the conditions comprise:
the location information of the target location management client failing to meet quality of service, QoS, of a vertical service;
not permitting to share the location information of the target location management client; or
having no location management client in a same location area as the first location management client.

48. A positioning apparatus for location management client, for use in a target location management client, comprising:
a first sending unit, used for sending location information of the target location management client to a location management server, wherein the location information is used to represent location information of a first location management client in case that the target location management client shares a same location with the first location management client.

49. The positioning apparatus of claim 48, wherein the apparatus further comprises a second sending unit; the second sending unit is used for:
sending a location service registration request to the location management server, wherein the location service registration request comprises at least one of following:
an international mobile subscriber identity of the target location management client;
an associated identity corresponding to the target location management client;
a terminal type or a subscriber identity module, SIM, card type corresponding to the target location management client; or
indication information, wherein the indication information is used to indicate whether to permit sharing the location information of the target location management client or not.

50. The positioning apparatus of claim 49, wherein
in case that the international mobile subscriber identity of the target location management client is the same as an international mobile subscriber identity of the first location management client, the target location management client shares the same location with the first location management client.

51. The positioning apparatus of claim 48 or 49, wherein the apparatus further comprises a first receiving unit, a first processing unit, and a third sending unit;
the first receiving unit is used for receiving a location sharing verification request sent from the location management server, wherein the location sharing verification request comprises an identity of the first location management client and/or an associated identity of the first location management client;
the first processing unit is used for determining, based on the identity of the first location management client and/or the associated identity of the first location management client, a location sharing verification result, wherein the location sharing verification result is used to indicate whether the first location management client is in a same location area as the target location management client or not; and
the third sending unit is used for sending a location sharing verification response to the location management server, wherein the location sharing verification response comprises the location sharing verification result.

52. The positioning apparatus of claim 51, wherein the apparatus further comprises a second receiving unit, a second processing unit, and a fourth sending unit;
the second receiving unit is used for receiving a location duration and a location time interval of the first location management client sent from the location management server;
the second processing unit is used for determining, based on the location duration and the location time interval, a preset time period, wherein during the preset time period, the associated location management client and the first location management client are in the same location area; and
the fourth sending unit is used for sending the preset time period to the location management server, wherein the preset time period is used to determine whether to send the location sharing verification request or not.

53. The positioning apparatus of claim 51, wherein the first processing unit is further used for:
outputting prompt information to a user based on the identity of the first location management client and/or the associated identity of the first location management client, wherein the prompt information is used to prompt the user to confirm whether the first location management client is in the same location area as the target location management client or not; and in response to an operation of the user on the prompt information, determining the location sharing verification result.

54. The positioning apparatus of claim 51, wherein the first processing unit is further used for:
establishing, based on the identity of the first location management client and/or the associated identity of the first location management client, a sidelink connection with the first location management client; and
in case that the sidelink connection is established, determining, based on a distance between the first location management client and the target location management client, the location sharing verification result.

55. A processor readable storage medium, wherein the processor readable storage medium stores computer programs that cause a processor to perform the positioning method for location management client of any of claims 1 to 11; or, perform the positioning method for location management client of any of claims 12 to 18.
